# EUROPEAN PATENT SPECIFICATION

(11) **EP 2 206 977 B1**
(45) Date of publication and mention of the grant of the patent: **20.06.2018**
(21) Application number: 08835868.4
(22) Date of filing: 03.09.2008
(51) Int. Cl.: F24F 3/14, B01D 53/26, F24F 1/02, F24F 7/08

(54) **HUMIDITY CONTROL DEVICE AND VENTILATION DEVICE**
FEUCHTIGKEITSKONTROLLGERÄT UND BELÜFTUNGSGERÄT
DISPOSITIF DE RÉGULATION DE L'HUMIDITÉ ET DISPOSITIF DE VENTILATION

(30) Priority: 05.10.2007 JP 2007262462; 05.10.2007 JP 2007262463
(43) Date of publication of application: 14.07.2010
(73) Proprietor: Daikin Industries, Ltd., Osaka 530-8323 (JP)
(72) Inventor: YABU, Tomohiro, Sakai-shi Osaka 591-8511 (JP); OKUMURA, Yasunobu, Sakai-shi Osaka 591-8511 (JP)
(74) Representative: Hoffmann Eitle
(86) International application number: PCT/JP2008/002412
(87) International publication number: WO 2009/044505

(56) References cited:
- WO-A2-02/12806
- JP-A- 6 257 817
- JP-A- 2005 009 767
- JP-A- 2005 009 767
- JP-A- 2006 084 152
- JP-A- 2006 084 152
- JP-A- 2007 010 229
- JP-A- 2007 010 231
- US-A- 5 140 830
- US-A1- 2006 278 085

## Description

### TECHNICAL FIELD

The present invention relates to humidity control apparatuses for controlling humidity in a room by an adsorbent carried on an adsorption member, and more particularly to improvement in ease of maintenance of the humidity control apparatuses.

### BACKGROUND ART

Humidity control apparatuses for controlling humidity in a room have been known.

For instance, patent application publication JP 2005-009767 A discloses a humidity control apparatus as recited in the preamble of claim 1. In addition, patent application publication JP 2006-084152 A discloses a ventilation system comprising a moisture absorbing/releasing device for absorbing moisture from one of the air flowing in an exhaust duct and the air flowing in an intake duct, and releasing the absorbed moisture to the other.

Also, patent application publication JP 2007-010231 A discloses a humidity control apparatus including an adsorption heat exchanger. The humidity control apparatus includes a flat casing, and an air passage is formed in the casing. An outside air inlet port and a room air inlet port are formed in one of side surfaces of the casing, and an outward discharge port and an inward supply port are formed in the other side surface. Ducts through which the air passes are connected to the four ports, respectively. In the casing, a refrigerant circuit connecting a compressor, and two adsorption heat exchangers is provided. The refrigerant circuit constitutes a heating medium circuit for performing a refrigeration cycle by circulating a refrigerant as a heating fluid medium. Each of the two adsorption heat exchangers carries an adsorbent for adsorbing and desorbing moisture on a surface of a heat exchanger (an adsorption member). The refrigerant heats or cools the adsorbent. The adsorption heat exchangers are contained in two humidity control chambers provided in the casing, respectively.

In the humidity control apparatus of JP 2007-010231, for example, ventilation/dehumidification operation is performed in the following manner. In the ventilation/dehumidification operation, one of the adsorption heat exchangers functions as a condenser (a radiator), and the other adsorption heat exchanger functions as an evaporator. The air sucked through the outside air inlet port flows into one of the two humidity control chambers, and passes through the adsorption heat exchanger functioning as the evaporator. As a result, moisture in the air is adsorbed by the adsorbent on the adsorption heat exchanger, thereby dehumidifying the air. In this case, heat generated by the moisture adsorption by the adsorbent is used to evaporate the refrigerant flowing through the adsorption heat exchanger. The dehumidified air is supplied to the inside of the room through the inward supply port, thereby dehumidifying the inside of the room. Air sucked through the room air inlet port passes through the adsorption heat exchanger in the other humidity control chamber. In this adsorption heat exchanger, the adsorbent is heated by heat of condensation of the refrigerant, and the moisture is separated (desorbed) from the adsorbent. This recovers the adsorbent carried on the adsorption heat exchanger. The air used for the recovery of the adsorbent of the adsorption heat exchanger is discharged outside the room through the outward discharge port.

Patent application publication JP H06-257817 teaches a ventilation apparatus including a heat exchange element. The ventilation apparatus includes a casing placed on a ceiling, and an air passage is formed in the casing. Like JP 2007-010231 A, an outside air inlet port, a room air inlet port, an outward discharge port, and an inward supply port are formed in the casing, and ducts are connected to the four ports, respectively. A heat exchange element is arranged in the air passage. The heat exchange element constitutes a cross-flow heat exchanger in which two air flow paths intersect with each other.

In operating the ventilation apparatus of JP H06-257817, the air sucked through the outside air inlet port flows in a first flow path of the heat exchange element. The air sucked through the room air inlet port flows in a second flow path of the heat exchange element. In the heat exchange element, heat exchange is performed between the outside air flowing in the first flow path and the room air flowing in the second flow path. In the heat exchange element, moisture is delivered and received between the outside air and the room air. In this way, the outside air whose humidity and temperature are controlled in the first flow path of the heat exchange element is supplied to the inside of the room through the inward supply port. The room air that passed through the second flow path of the heat exchange element is discharged out of the room through the outward discharge port.

### SUMMARY OF THE INVENTION

### TECHNICAL PROBLEM

As described above, the adsorption heat exchangers, the compressor, etc., are contained in the casing of the humidity control apparatus of JP 2007-010231 A. For maintenance of the adsorption heat exchangers, the compressor, etc. in a conventional manner, the adsorption heat exchangers and the compressor are independently removed from the casing. Therefore, in the conventional maintenance, refrigerant pipes, etc., for connecting the components are detached first, and then the intended components are removed from the casing. This imposes inconvenience to workers who maintains the components.

In view of the foregoing, the present invention has been achieved. An object of the invention is to improve ease of maintenance of a humidity control apparatus for controlling air humidity by an adsorbent carried on an adsorption member.

### SOLUTION TO THE PROBLEM

A humidity control apparatus according to the present invention is as defined in claim 1.

According to the invention, the casing (20) contains first and second adsorption members (14, 15) and the heating medium circuit (11). The air admitted in the casing (20) passes through the adsorption members (14, 15). When the adsorbents of the adsorption members (14, 15) are heated by the heating fluid medium in the heating medium circuit (11), moisture adsorbed by the adsorbents is desorbed, and is given in the air. This humidifies the air. The air humidified in this manner is supplied to the inside of the room, thereby humidifying the inside of the room. When the adsorbents of the adsorption members (14, 15) are cooled by the heating fluid medium in the heating medium circuit (11), moisture in the air is adsorbed by the adsorbents, and heat generated by the adsorption is given to the heating fluid medium. This dehumidifies the air. The air dehumidified in this manner is supplied to the inside of the room, thereby dehumidifying the inside of the room.

In the present invention, the holding member (50) holds the adsorption members (14, 15) and the heating medium circuit (11) together. Therefore, a maintenance worker, etc., can remove the adsorption members (14, 15) and the heating medium circuit (11) from the casing (20) by drawing the holding member (50) out of the casing (20). In this case, refrigerant pipes of the heating medium circuit (11) are also drawn out. Unlike the conventional example, this eliminates the need to detach and reconnect the pipes.

### ADVANTAGES OF THE INVENTION

In the present invention, the adsorption members (14, 15) for controlling air humidity, and the heating medium circuit (11) in which the heating fluid medium for heating or cooling the adsorbents of the adsorption members (14, 15) are held together in the holding member (50), and the holding member (50) is configured to be drawn out of the casing (20). Therefore, according to the invention, the maintenance worker, etc., can remove the adsorption members (14, 15) and the heating medium circuit (11) from the casing (20) by drawing the holding member (50) out, thereby allowing for easy maintenance of the adsorption members (14, 15), and the components connected to the heating medium circuit (11). In drawing the holding member (50) out, detaching and reconnecting the pipes of the heating medium circuit (11) are not required. This can drastically improve the ease of maintenance of the humidity control apparatus.

In the invention, the holding member (50) may be configured to be drawn out of the casing (20) from the front side of the casing (20). Therefore, even if the humidity control apparatus is installed in the storage space, such as in the closet, the holding member (50) can be drawn out from the opening side of the closet, thereby allowing for easy maintenance of the adsorption member (14, 15) and the heating medium circuit (11).

In particular, in the invention, the humidity control chambers (65, 66) containing the two adsorption heat exchangers (14, 15), respectively, are aligned in the vertical direction. This can alleviate size increase of the casing (20) in the horizontal direction. Therefore, space for installation of the humidity control apparatus in the horizontal direction can be reduced to a further extent.

### BRIEF DESCRIPTION OF THE DRAWINGS

[FIG. 1] FIG. 1 is a schematic view illustrating a humidity control apparatus and a ventilation apparatus of a first embodiment installed in a closet.
[FIG. 2] FIG. 2 is a schematic view illustrating the humidity control apparatus of the first embodiment, in which FIG. 2(A) is a top view, FIG. 2(B) is a view observed in a direction of an arrow X-X in FIG. 2(A), FIG. 2(C) is a view observed in a direction of an arrow Y-Y in FIG. 2(A), and FIG. 2(D) is a view observed in a direction of an arrow Z-Z in FIG. 2(A).
[FIG. 3] FIG. 3 is a perspective view illustrating the inside of the humidity control apparatus of the first embodiment.
[FIG. 4] FIG. 4 is a perspective view schematically illustrating an adsorption heat exchanger.
[FIG. 5] FIG. 5 is a schematic view illustrating a refrigerant circuit of a humidity control apparatus of first and second embodiments.
[FIG. 6] FIG. 6 is a perspective view illustrating an air flow in first operation of dehumidification/ventilation operation and humidification/ventilation operation in the humidity control apparatus of the first embodiment.
[FIG. 7] FIG. 7 is a perspective view illustrating an air flow in second operation of the dehumidification/ventilation operation and the humidification/ventilation operation in the humidity control apparatus of the first embodiment.
[FIG. 8] FIG. 8 is a perspective view illustrating an air flow in first operation of dehumidification/circulation operation and humidification/circulation operation in the humidity control apparatus of the first embodiment 1.
[FIG. 9] FIG. 9 is a perspective view illustrating an air flow in second operation of the dehumidification/circulation operation and the humidification/circulation operation in the humidity control apparatus of the first embodiment 1.
[FIG. 10] FIG. 10 is a perspective view illustrating the humidity control apparatus of the first embodiment 1, with a drawer unit being drawn out.
[FIG. 11] FIG. 11 is a schematic view illustrating a humidity control apparatus of a second embodiment out of the scope of the invention, in which FIG. 11(A) is a top view, FIG. 11(B) is a view observed in a direction of an arrow Y-Y in FIG. 11(A), and FIG. 11(C) is a view observed in a direction of an arrow Z-Z in FIG. 11(A).
[FIG. 12] FIG. 12 is a top view illustrating the humidity control apparatus of the second embodiment 1 with a drawer unit being drawn out.
[FIG. 13] FIG. 13 is a schematic view illustrating a humidity control apparatus of a third embodiment out of the scope of the invention.
[FIG. 14] FIG. 14 is a schematic view illustrating the humidity control apparatus of the third embodiment, with a drawer unit being drawn out.
[FIG. 15] FIG. 15 is a schematic view illustrating a humidity control apparatus of a fourth embodiment, in which FIG. 15(A) is a top view, FIG. 15(B) is a view observed in a direction of an arrow X-X in FIG. 15(A), FIG. 15(C) is a view observed in a direction of an arrow Y-Y in FIG. 15(A), and FIG. 15(D) is a view observed in a direction of an arrow Z-Z of FIG. 15(A).
[FIG. 16] FIG. 16 is a perspective view illustrating the inside of the humidity control apparatus of the fourth embodiment.
[FIG. 17] FIG. 17 is a perspective view illustrating an air flow in first operation of dehumidification/ventilation operation and humidification/ventilation operation in the humidity control apparatus of the fourth embodiment.
[FIG. 18] FIG. 18 is a perspective view illustrating an air flow in second operation of the dehumidification/ventilation operation and the humidification/ventilation operation in the humidity control apparatus of the fourth embodiment.
[FIG. 19] FIG. 19 is a perspective view illustrating an air flow in first operation of dehumidification/circulation operation and humidification/circulation operation in the humidity control apparatus of the fourth embodiment.
[FIG. 20] FIG. 20 is a perspective view illustrating an air flow in second operation of the dehumidification/circulation operation and the humidification/circulation operation in the humidity control apparatus of the fourth embodiment.
[FIG. 21] FIG. 21 is a schematic view illustrating a humidity control apparatus of a fifth embodiment, in which FIG. 21(A) is a top view, FIG. 21(B) is a view observed in a direction of an arrow X-X in FIG. 21(A), FIG. 21(C) is a view observed in a direction of an arrow Y-Y in FIG. 21(A) and FIG. 21(D) is a view observed from a direction of an arrow Z-Z in FIG. 21(A).
[FIG. 22] FIG. 22 is a perspective view illustrating the inside of the humidity control apparatus of the fifth embodiment.
[FIG. 23] FIG. 23 is a perspective view illustrating an air flow in first operation of dehumidification/ventilation operation and humidification/ventilation operation in the humidity control apparatus of the fifth embodiment.
[FIG. 24] FIG. 24 is a perspective view illustrating an air flow in second operation of the dehumidification/ventilation operation and the humidification/ventilation operation in the humidity control apparatus of the fifth embodiment.
[FIG. 25] FIG. 25 is a perspective view illustrating an air flow in first operation of dehumidification/circulation operation and humidification/circulation operation in the humidity control apparatus of the fifth embodiment.
[FIG. 26] FIG. 26 is a perspective view illustrating an air flow in second operation of the dehumidification/circulation operation and the humidification/circulation operation in the humidity control apparatus of the fifth embodiment.
[FIG. 27] FIG. 27 is a schematic view illustrating a ventilation apparatus of a sixth embodiment out of the scope of the invention, in which FIG. 27(A) is a top view, FIG. 27(B) is a view observed in a direction of an arrow X-X in FIG. 27(A), FIG. 27(C) is a view observed in a direction of an arrow Y-Y in FIG. 27(A), and FIG. 27(D) is a view observed in a direction of an arrow Z-Z in FIG. 27(A).
[FIG. 28] FIG. 28 is a schematic view illustrating an air flow in the ventilation apparatus of the sixth embodiment.

### DESCRIPTION OF EMBODIMENTS

Embodiments will be described in detail with reference to the drawings.

### [First Embodiment within the scope of the Invention]

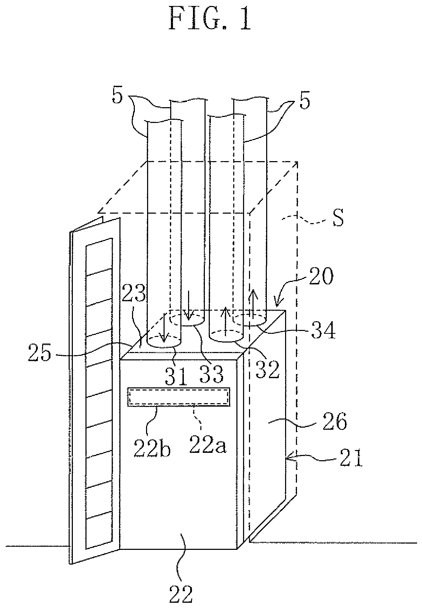

A humidity control apparatus (10) of a first embodiment of the invention is an on-floor humidity control apparatus installed on a floor of a room to control air humidity in a room. As shown in FIG. 1, the humidity control apparatus (10) is configured to be installed in storage space (S) of a closet for storing clothes, etc.

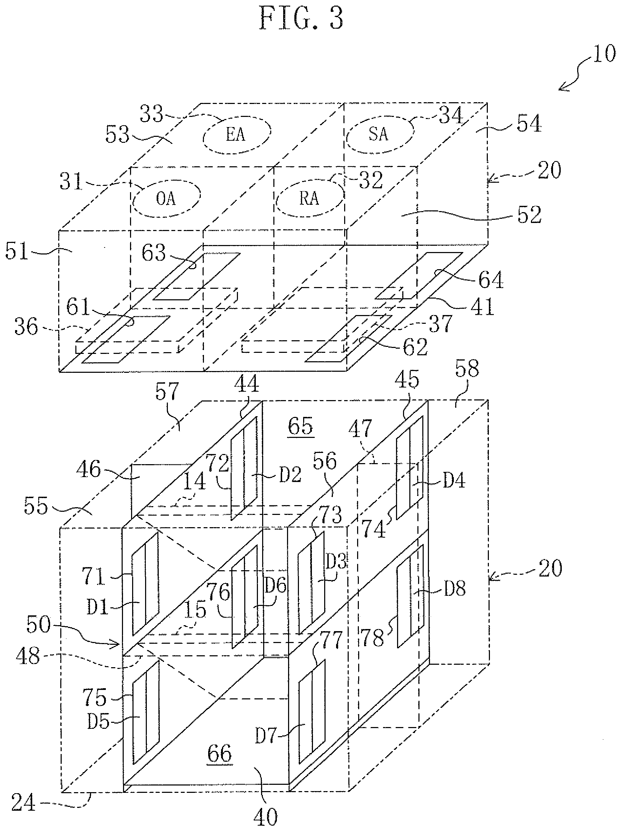

As shown in FIGS. 1 to 3, the humidity control apparatus (10) includes a casing (20) in the shape of a vertically oriented rectangular parallelepiped. In a perspective view of FIG. 3 (and in the other perspective views), an upper portion of the casing (20) and the other portion are divided for the sake of convenience. The casing (20) includes a box-shaped casing body (21) with only a front side thereof being opened, and a front cover (22) detachably attached to an opening on the front side of the casing body (21).

The casing body (21) includes a top plate (23) on an upper end thereof, and a bottom plate (24) on a lower end thereof. The casing body (21) includes a right plate (25) on a right end thereof, and a left plate (26) on a left end thereof. Further, the casing body (21) includes a rear plate (27) on a rear end thereof.

Four duct connection ports (31, 32, 33, 34) are formed in the top plate (23). The duct connection ports (31, 32, 33, 34) are arranged to be adjacent to each other so as to correspond to four corners of the top plate (23). Specifically, the four duct connection ports (31, 32, 33, 34) includes an outside air inlet port (31) arranged in a front right portion of the top plate (23), a room air inlet port (32) arranged in a front left portion of the top plate (23), an outward discharge port (33) arranged in a rear right portion of the top plate (23), and an inward supply port (34) arranged in a rear left portion of the top plate (23). That is, the outside air inlet port (31), the room air inlet port (32), the outward discharge port (33), and the inward supply port (34) are gathered on the top plate of the casing body (21).

Ducts (5) through which the air can flow are connected to the duct connection ports (31, 32, 33, 34), respectively (see FIG 1). Each of the ducts (5) extends upward toward a ceiling of the room, and runs above the ceiling to reach a predetermined space. The outside air inlet port (31) and the outward discharge port (33) communicate with the outside of the room through the ducts (5), and the room air inlet port (32) and the inward supply port (34) communicate with the inside of the room through the ducts (5). The outside air inlet port (31) constitutes an opening for sucking outside air (OA) in the casing (20), and the room air inlet port (32) constitutes an opening for sucking room air (RA) in the casing (20). The outward discharge port (33) constitutes an opening for discharging the air in the casing (20) outside the room as exhaust air (EA), and the inward supply port (34) constitutes an opening for supplying the air in the casing (20) inside the room as supply air (SA).

The front cover (22) is detachably attached to the casing body (21) so as to cover the front opening of the casing body (21). The front cover (22) includes a control switch (not shown) for allowing a user, etc., to switch the operation of the humidity control apparatus (10). In an upper portion of the front cover (22), an opening (22a) through which filters (36, 37) described later can be drawn out, and an open/close lid (22b) capable of opening/closing the opening (22a) are provided. The open/close lid (22b) is detachably attached to the front cover (22).

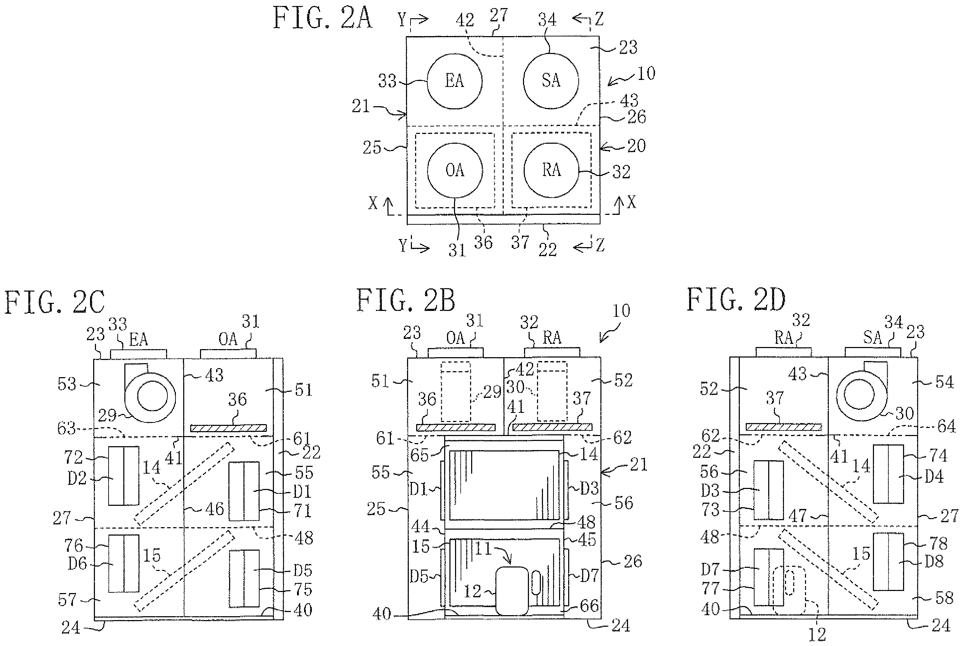

As shown in FIGS. 2 and 3, with the front cover (22) attached to the casing body (21), a rectangular parallelepiped room is formed in the casing (20). An upper divider plate (41) is arranged in the casing (20) near the upper side of the casing (20). The upper divider plate (41) is horizontally supported by the casing (20).

A flat, rectangular parallelepiped room is provided between the upper divider plate (41) and the top plate (23). In this room, a longitudinal divider plate (42), and a lateral divider plate (43) are provided. The longitudinal divider plate (42) is in the shape of a plate having a long side extending in the front-back direction, and the lateral divider plate (43) is in the shape of a plate having a long side extending in the lateral direction. The longitudinal divider plate (42) and the lateral divider plate (43) are perpendicularly supported by the casing (20) to be orthogonal to each other. The longitudinal divider plate (42) and the lateral divider plate (43) divide the room between the upper divider plate (41) and the top plate (23) into four passages (51, 52, 53, 54). The four passages include an outside air inlet passage (51), a room air inlet passage (52), an outward discharge passage (53), and an inward supply passage (54).

The outside air inlet passage (51) is provided in a front right portion in the casing (20), and the room air inlet passage (52) is provided in a front left portion of the casing (20). The outward discharge passage (53) is provided in a rear right portion of the casing (20), and the inward supply passage (54) is provided in a rear left portion of the casing (20). The upper divider plate (41) is provided with a first communication port (61) facing the outside air inlet passage (51), a second communication port (62) facing the room air inlet passage (52), a third communication port (63) facing the outward discharge passage (53), and a fourth communication port (64) facing the inward supply passage (54).

The outside air inlet port (31) communicates with the first communication port (61) through the outside air inlet passage (51), and the room air inlet port (32) communicates with the second communication port (62) through the room air inlet passage (52). The outward discharge port (33) communicates with the third communication port (63) through the outward discharge passage (53), and the inward supply port (34) communicates with the fourth communication port (64) through the inward supply passage (54).

An outside air filter (36) is arranged in the outside air inlet passage (51), and a room air filter (37) is arranged in the room air inlet passage (52). Specifically, the outside air filter (36) constitutes a first filter arranged below the outside air inlet port (31), and the room air filter (37) constitutes a second filter arranged below the room air inlet port (32). Each of the filters (36, 37) is in the shape of a plate or a sheet, and is kept in a horizontal position to cover every part of a lateral cross section of the corresponding inlet passage (51, 52). The filters (36, 37) are arranged to be able to move back and forth in the corresponding inlet passages (51, 52).

The outward discharge passage (53) contains a discharge fan (29), and the inward supply passage (54) contains a supply fan (30) (see FIG. 2). The fans (29, 30) are centrifugal multi-blade fans (so-called sirocco fans). In the perspective view of FIG. 3 (and in the other perspective views), the fans (29, 30) are not shown. The discharge fan (29) blows the air introduced through the third communication port (63) toward the outward discharge port (33). The supply fan (30) blows the air introduced through the fourth communication port (64) toward the inward supply port (34).

A rectangular parallelepiped room is provided between the bottom plate (24) and the upper divider plate (41). A first divider plate (44) and a second divider plate (45) are arranged in this room. The first divider plate (44) and the second divider plate (45) extend from the bottom plate (24) to the upper divider plate (41), and are perpendicularly supported by the casing (20) to be parallel to the right and left plates (25, 26) of the casing (20). The first divider plate (44) and the second divider plate (45) divide the room between the bottom plate (24) and the upper divider plate (41) into three rooms.

A right room in the three rooms is divided by a third divider plate (46) into two rooms aligned in the front-back direction. A left room in the three rooms is divided by a fourth divider plate (47) into two rooms aligned in the front-back direction. The room in front of the third divider plate (46) constitutes a first intermediate passage (55), and the room in front of the fourth divider plate (47) constitutes a second intermediate passage (56). The room behind the third divider plate (46) constitutes a third intermediate passage (57), and the room behind the fourth divider plate (47) constitutes a fourth intermediate passage (58).

An upper end of the first intermediate passage (55) communicates with the first communication port (61), an upper end of the second intermediate passage (56) communicates with the second communication port (62), an upper end of the third intermediate passage (57) communicates with the third communication port (63), and an upper end of the fourth intermediate passage (58) communicates with the fourth communication port (64). Lower ends of the intermediate passages (55, 56, 57, 58) are closed by the bottom plate (24).

A center room in the three rooms is divided by a central divider plate (48) into two rooms aligned in the vertical direction. An upper room constitutes a first humidity control chamber (65), and a lower room constitutes a second humidity control chamber (66). Specifically, the first humidity control chamber (65) and the second humidity control chamber (66) are aligned in the vertical direction to be adjacent to each other with the central divider plate (48) interposed therebetween. At a lower end of the second humidity control chamber (66), a support plate (40) is arranged to extend between the first divider plate (44) and the second divider plate (45).

The first humidity control chamber (65) contains a first adsorption heat exchanger (14), and the second humidity control chamber (66) contains a second adsorption heat exchanger (15). The first adsorption heat exchanger (14) is arranged on the central divider plate (48), and the second adsorption heat exchanger (15) is arranged on the support plate (40). The first adsorption heat exchanger (14) and the second adsorption heat exchanger (15) are connected in series to a refrigerant circuit (11) described in detail later.

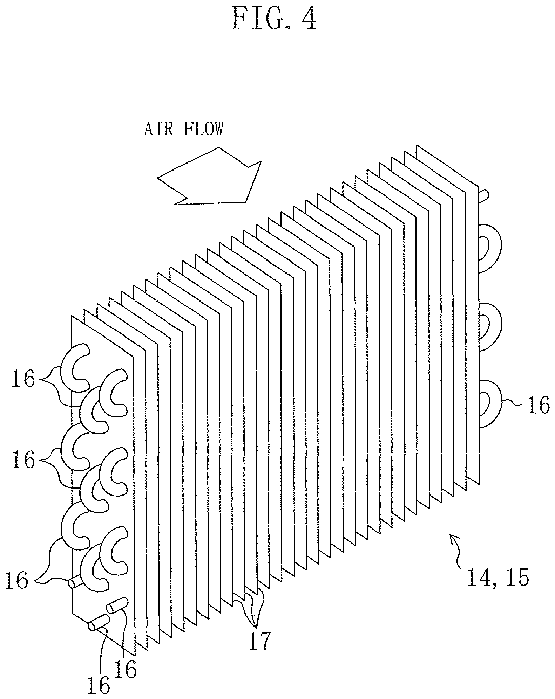

As shown in FIG. 4, the adsorption heat exchangers (14, 15) are cross-fin type fin- and-tube heat exchangers, respectively. Each of the adsorption heat exchangers (14, 15) includes copper heat transfer tubes (16), and aluminum fins (17). Each of the fins (17) of the adsorption heat exchangers (14, 15) is in the shape of a rectangular plate, and they are arranged at regular intervals. The heat transfer tubes (16) extend in the direction of alignment of the fins (17) in serpentine form. That is, the heat transfer tube (16) includes straight parts penetrating the fins (17), and U-shaped parts connecting the adjacent straight parts, and they are alternately connected.

Each of the adsorption heat exchangers (14, 15) constitutes an adsorption member carrying an adsorbent on a surface of a heat exchanger. Specifically, in each of the adsorption heat exchangers (14, 15), the adsorbent is carried on the surfaces of the fins (17), and the air passing between the fins (17) comes into contact with the adsorbent carried on the fins (17). The adsorbent may be a material capable of adsorbing moisture in the air, such as zeolite, silica gel, activated carbon, an organic polymer material having a hydrophilic functional group, etc.

Each of the adsorption heat exchangers (14, 15) of the first embodiment is arranged obliquely in the corresponding humidity control chambers (65, 66). Specifically, each of the adsorption heat exchangers (14, 15) is supported in the corresponding humidity control chambers (65, 66) in such a manner that the fins (17) are parallel to the first divider plate (44) and the second divider plate (45), and upper ends of the fins (17) are inclined forward relative to the perpendicular direction. Thus, the length of the fins (17) of the adsorption heat exchangers (14, 15) can be increased in the longitudinal direction, thereby increasing an area in the adsorption heat exchangers (14, 15) passed by the air. This increases efficiency in contact between the adsorbent and the air.

In this embodiment, the second humidity control chamber (66) contains the compressor (12) connected to the refrigerant circuit (11). The compressor (12) is a vertically installed compressor, and is arranged on the support plate (40). The compressor (12) is constituted of, for example, a scroll type or a rotary type compressor, etc. In this embodiment, the compressor (12) is arranged upstream of the second adsorption heat exchanger (15) in the direction of air flow. However, the compressor (12) may be arranged downstream of the second adsorption heat exchanger (15).

Each of the first divider plate (44) and the second divider plate (45) is provided with four flow ports through which the air enters or exits. Specifically, a first flow port (71) is formed in an upper front portion of the first divider plate (44), and a second flow port (72) is formed in an upper rear portion of the first divider plate (44). A third flow port (73) is formed in an upper front portion of the second divider plate (45), and a fourth flow port (74) is formed in an upper rear portion of the second divider plate (45). A fifth flow port (75) is formed in a lower front portion of the first divider plate (44), and a sixth flow port (76) is formed in a lower rear portion of the first divider plate (44). A seventh flow port (77) is formed in a lower front portion of the second divider plate (45), and an eighth flow port (78) is formed in a lower rear portion of the second divider plate (45).

The first flow port (71) allows the first intermediate passage (55) and the first humidity control chamber (65) to communicate with each other. The second flow port (72) allows the third intermediate passage (57) and the first humidity control chamber (65) to communicate with each other. The third flow port (73) allows the second intermediate passage (56) and the first humidity control chamber (65) to communicate with each other. The fourth flow port (74) allows the fourth intermediate passage (58) and the first humidity control chamber (65) to communicate with each other. The fifth flow port (75) allows the first intermediate passage (55) and the second humidity control chamber (66) to communicate with each other. The sixth flow port (76) allows the third intermediate passage (57) and the second humidity control chamber (66) to communicate with each other. The seventh flow port (77) allows the second intermediate passage (56) and the second humidity control chamber (66) to communicate with each other. The eighth flow port (78) allows the fourth intermediate passage (58) and the second humidity control chamber (66) to communicate with each other.

Each of the first divider plate (44) and the second divider plate (45) includes four dampers for opening/closing the corresponding flow ports. Specifically, the first divider plate (44) includes a first damper (D1) for opening/closing the first flow port (71), a second damper (D2) for opening/closing the second flow port (72), a fifth damper (D5) for opening/closing the fifth flow port (75), and a sixth flow damper (D6) for opening/closing the sixth flow port (76). The second divider plate (45) includes a third damper (D3) for opening/closing the third flow port (73), a fourth damper (D4) for opening/closing the fourth flow port (74), a seventh damper (D7) for opening/closing the seventh flow port (77), and an eighth damper (D8) for opening/closing the eighth flow port (78).

Each of the dampers (D1-D8) includes, for example, two shutters, and a motor for supporting the shutters by a horizontal axis thereof, and rotating the shutters about the horizontal axis. Specifically, each of the dampers (D1-D8) closes the corresponding flow port (71-78) when the two shutters are shifted to the perpendicular position by the rotation of the motor, and opens the corresponding flow port (71-78) when the two shutters are shifted to the horizontal position by the rotation of the motor.

The first divider plate (44) and the second divider plate (45) configured in the above-described manner are arranged on both sides of the two humidity control chambers (65, 66) in the lateral direction. The first divider plate (44) and the second divider plate (45) extend in both of the two humidity control chambers (65, 66), and are perpendicularly supported by the casing (20).

### <Structure of Refrigerant Circuit>

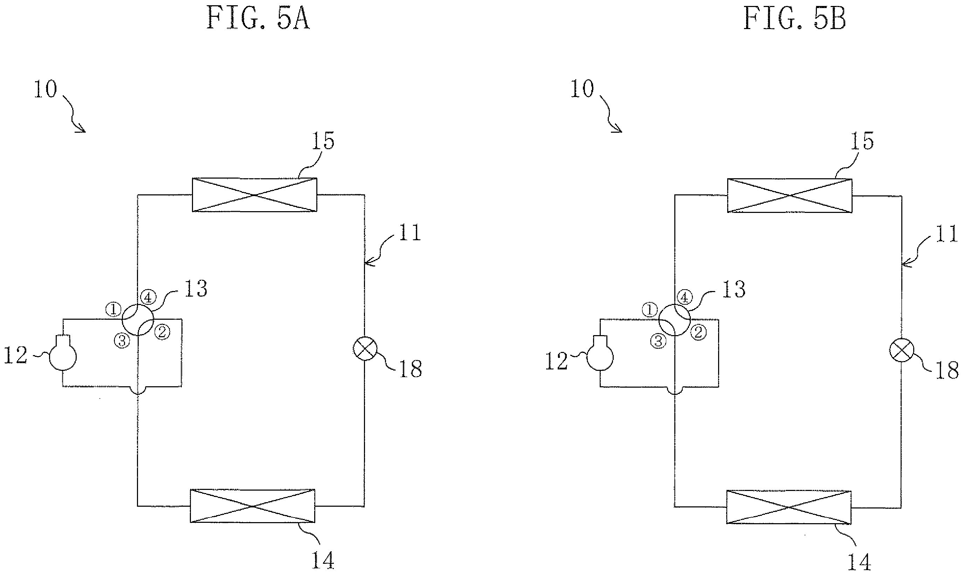

The refrigerant circuit (11) formed in the humidity control apparatus (10) will be described below with reference to FIG. 5.

The refrigerant circuit (11) is a closed circuit including the first adsorption heat exchanger (14), the second adsorption heat exchanger (15), the compressor (12), a four-way switching valve (13), and a motor-operated expansion valve (18). The refrigerant circuit (11) performs a vapor compression refrigeration cycle by circulating a refrigerant filled therein.

In the refrigerant circuit (11), a discharge side of the compressor (12) is connected to a first port of the four-way switching valve (13), and a suction side of the compressor (12) is connected to a second port of the four-way switching valve (13). An end of the first adsorption heat exchanger (14) is connected to a third port of the four-way switching valve (13). The other end of the first adsorption heat exchanger (14) is connected to a fourth port of the four-way switching valve (13) through the motor-operated expansion valve (18) and the second adsorption heat exchanger (15).

The four-way switching valve (13) is configured to be able to switch between a first state where the first and fourth ports communicate with each other, and the second and third ports communicate with each other (a state shown in FIG. 5(A)), and a second state where the first and third ports communicate with each other, and the second and fourth ports communicate with each other (a state shown in FIG. 5(B)).

In the humidity control apparatus (10) of this embodiment, the refrigerant circuit (11) constitutes a heating medium circuit. In the refrigerant circuit (11), a high pressure gaseous refrigerant is supplied as a heating fluid medium to one of the two adsorption heat exchangers (14, 15) serving as a condenser (a radiator), and a low pressure gas-liquid two-phase refrigerant is supplied as a cooling fluid medium to the other adsorption heat exchanger (14, 15) serving as an evaporator.

In the humidity control apparatus (10) of this embodiment, the above-described components of the refrigerant circuit (11), and refrigerant pipes connecting the components are arranged in one of the first humidity control chamber (65) and the second humidity control chamber (66).

### <Structure of Drawer Unit>

In the humidity control apparatus (10) of this embodiment, the support plate (40), the first divider plate (44), the second divider plate (45), and the central divider plate (48) are integrally coupled to constitute a drawer unit (50). Specifically, the drawer unit (50) constitutes a holding member which makes it possible to draw the whole refrigerant circuit (11) out of the casing (20). The drawer unit (50) holds the compressor (12), the first adsorption heat exchanger (14), the second adsorption heat exchanger (15), the four-way switching valve (13), the motor-operated expansion valve (18), and the refrigerant pipes connecting them. The drawer unit (50) is able to move in the front-back direction inside the casing (20). Specifically, on an upper surface of the bottom plate (24) and a lower surface of the upper divider plate (41), rail grooves (not shown) extend in the front-back direction with which lower ends and upper ends of the first divider plate (44) and the second divider plate (45) engage. The first divider plate (44) and the second divider plate (45) are slidable in the front-back direction along the rail grooves.

### -Operation Mechanism-

The humidity control apparatus (10) of the first embodiment selectively performs "dehumidification/ventilation operation," "humidification/ventilation operation," "dehumidification/circulation operation," and "humidification/circulation operation." In the "dehumidification/ventilation operation" and the "humidification/ventilation operation," the humidity control apparatus (10) admits the outside air (OA) for humidity control, and supplies the humidity-controlled air to the inside of the room as supply air (SA), and simultaneously, the humidity control apparatus (10) admits the room air (RA), and discharges it as exhaust air (EA). In the "dehumidification/circulation operation" and the "humidification/circulation operation," the humidity control apparatus (10) admits the room air (RA) for humidity control, and supplies the humidity-controlled air to the inside of the room as the supply air (SA), and simultaneously, the humidity control apparatus (10) admits the outside air (OA), and discharges it as the exhaust air (EA). The operations will be described in detail below.

### <Dehumidification/Ventilation Operation>

In the humidity control apparatus (10) performing the dehumidification/ventilation operation, first operation and second operation described later are alternately performed at predetermined time intervals (e.g., every three minutes).

When the supply fan (30) of the humidity control apparatus (10) is operated during the dehumidification/ventilation operation, the outside air enters the casing (20) through the outside air inlet port (31) as first air. When the discharge fan (29) is operated, the room air enters the casing (20) through the room air inlet port (32) as second air.

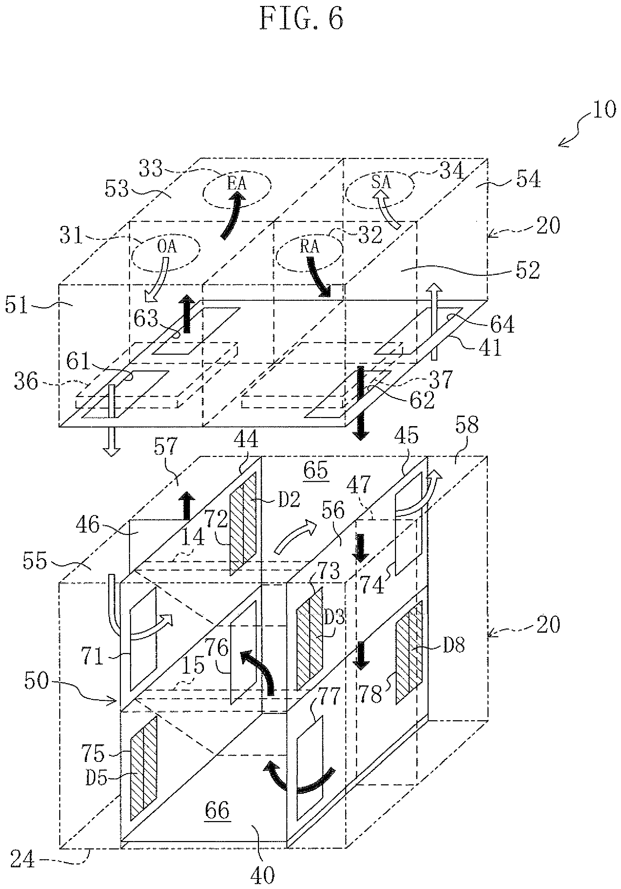

The first operation of the dehumidification/ventilation operation will be described below. As shown in FIG. 6, in the first operation, the first flow port (71), the fourth flow port (74), the sixth flow port (76), and the seventh flow port (77) are opened, and the second flow port (72), the third flow port (73), the fifth flow port (75), and the eighth flow port (78) are closed by switching the first to eighth dampers (D1-D8).

In the first operation, the four-way switching valve (13) in the refrigerant circuit (11) is set to the first state as shown in FIG. 5(A). In this state, the refrigerant in the refrigerant circuit (11) circulates to perform a refrigeration cycle. In this case, in the refrigerant circuit (11), the refrigerant discharged from the compressor (12) sequentially passes through the second adsorption heat exchanger (15), the motor-operated expansion valve (18), and the first adsorption heat exchanger (14). The second adsorption heat exchanger (15) functions as a condenser, and the first adsorption heat exchanger (14) functions as an evaporator.

As shown in FIG. 6, the first air that entered the outside air inlet passage (51) through the outside air inlet port (31) passes through the outside air filter (36). The outside air filter (36) traps dust contained in the first air. The first air that passed through the outside air filter (36) sequentially flows through the first communication port (61) and the first intermediate passage (55), and enters the first humidity control chamber (65) through the first flow port (71). The first air flows backward, and passes through the first adsorption heat exchanger (14). In the first adsorption heat exchanger (14), moisture in the first air is adsorbed by the adsorbent, and heat generated by the adsorption is absorbed by the refrigerant. The first air dehumidified by the first adsorption heat exchanger (14) enters the fourth intermediate passage (58) through the fourth flow port (74). The first air sequentially flows through the fourth communication port (64) and the inward supply passage (54), enters the duct through the inward supply port (34), and is supplied to the inside of the room.

The second air that entered the room air inlet passage (52) through the room air inlet port (32) passes through the room air filter (37). The room air filter (37) traps dust contained in the second air. The second air that passed through the room air filter (37) sequentially flows through the second communication port (62) and the second intermediate passage (56), and enters the second humidity control chamber (66) through the seventh flow port (77). The second air flows backward, and passes through the second adsorption heat exchanger (15). In the second adsorption heat exchanger (15), moisture is desorbed from the adsorbent heated by the refrigerant, and the desorbed moisture is given to the second air. The second air used for the recovery of the adsorbent of the second adsorption heat exchanger (15) flows into the third intermediate passage (57) through the sixth flow port (76). The second air sequentially flows through the third communication port (63) and the outward discharge passage (53), enters the duct through the outward discharge port (33), and is discharged outside the room.

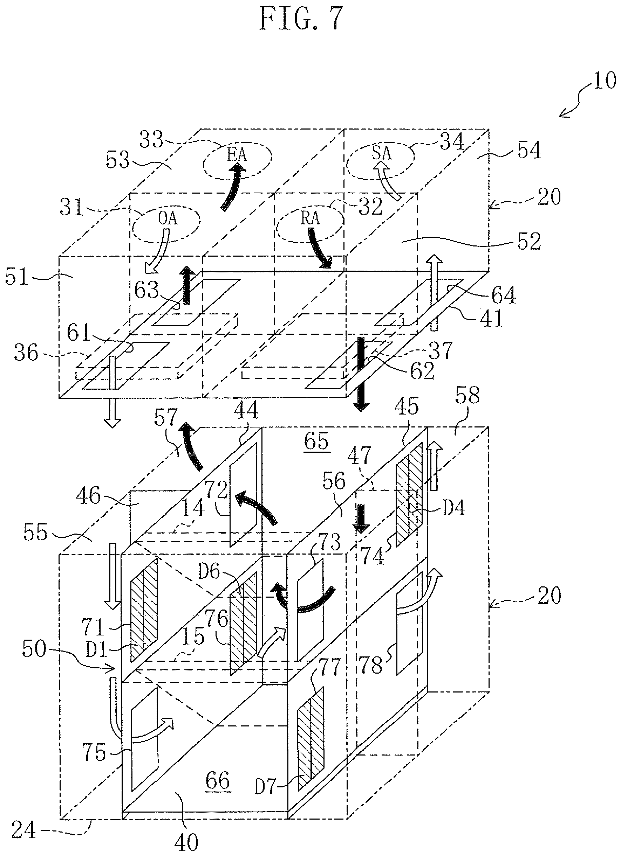

The second operation of the dehumidification/ventilation operation will be described below. As shown in FIG. 7, in the second operation, the second flow port (72), the third flow port (73), the fifth flow port (75), and the eighth flow port (78) are opened, and the first flow port (71), the fourth flow port (74), the sixth flow port (76), and the seventh flow port (77) are closed by switching the first to eighth dampers (D1-D8).

In the second operation, the four-way switching valve (13) of the refrigerant circuit (11) is set to the second state as shown in FIG. 5(B). In this state, the refrigerant in the refrigerant circuit (11) circulates to perform a refrigeration cycle. In this case, in the refrigerant circuit (11), the refrigerant discharged from the compressor (12) sequentially passes through the first adsorption heat exchanger (14), the motor-operated expansion valve (18), and the second adsorption heat exchanger (15). The first adsorption heat exchanger (14) functions as the condenser, and the second adsorption heat exchanger (15) functions as the evaporator.

As shown in FIG. 7, the first air that entered the outside air inlet passage (51) through the outside air inlet port (31) passes through the outside air filter (36). The outside air filter (36) traps dust contained in the first air. The first air that passed through the outside air filter (36) sequentially flows through the first communication port (61) and the first intermediate passage (55), and enters the second humidity control chamber (66) through the fifth flow port (75). The first air flows backward, and passes through the second adsorption heat exchanger (15). In the second adsorption heat exchanger (15), moisture in the first air is adsorbed by the adsorbent, and heat generated by the adsorption is absorbed by the refrigerant. The first air dehumidified by the second adsorption heat exchanger (15) flows into the fourth intermediate passage (58) through the eighth flow port (78). The first air sequentially flows through the fourth communication port (64) and the inward supply passage (54), enters the duct through the inward supply port (34), and is supplied to the inside of the room.

The second air that entered the room air inlet passage (52) through the room air inlet port (32) passes through the room air filter (37). The room air filter (37) traps dust contained in the second air. The second air that passed through the room air filter (37) sequentially flows through the second communication port (62) and the second intermediate passage (56), and enters the first humidity control chamber (65) through the third flow port (73). The second air flows backward, and passes through the first adsorption heat exchanger (14). In the first adsorption heat exchanger (14), moisture is desorbed from the adsorbent heated by the refrigerant, and the desorbed moisture is given to the second air. The second air used for the recovery of the adsorbent of the first adsorption heat exchanger (14) flows into the third intermediate passage (57) through the second flow port (72). The second air sequentially flows through the third communication port (63) and the outward discharge passage (53), enters the duct through the outward discharge port (33), and is discharged outside the room.

### <Humidification/Ventilation Operation>

In the humidity control apparatus (10) performing the humidification/ventilation operation, first operation and second operation described later are alternately performed at predetermined time intervals (e.g., every three minutes).

When the supply fan (30) of the humidity control apparatus (10) is operated during the humidification/ventilation operation, the outside air enters the casing (20) through the outside air inlet port (31) as first air. When the discharge fan (29) is operated, the room air enters the casing (20) through the room air inlet port (32) as second air.

In the first operation of the humidification/ventilation operation, as shown in FIG. 6, the first flow port (71), the fourth flow port (74), the sixth flow port (76), and the seventh flow port (77) are opened, and the second flow port (72), the third flow port (73), the fifth flow port (75), and the eighth flow port (78) are closed. The refrigerant circuit (11) enters the state shown in FIG. 5(B), in which the first adsorption heat exchanger (14) functions as a condenser, and the second adsorption heat exchanger (15) functions as an evaporator.

As shown in FIG. 6, the first air that entered the outside air inlet passage (51) through the outside air inlet port (31) sequentially flows through the outside air filter (36), the first communication port (61), the first intermediate passage (55), and the first flow port (71) to enter the first humidity control chamber (65), and passes through the first adsorption heat exchanger (14). In the first adsorption heat exchanger (14), moisture is desorbed from the adsorbent heated by the refrigerant, and the desorbed moisture is given to the first air. The first air humidified by the first adsorption heat exchanger (14) sequentially flows through the fourth flow port (74), the fourth intermediate passage (58), the fourth communication port (64), and the inward supply passage (54), enters the duct through the inward supply port (34), and is supplied to the inside of the room.

The second air that entered the room air inlet passage (52) through the room air inlet port (32) sequentially flows through the room air filter (37), the second communication port (62), the second intermediate passage (56), and the seventh flow port (77) to enter the second humidity control chamber (66), and passes through the second adsorption heat exchanger (15). In the second adsorption heat exchanger (15), moisture in the second air is adsorbed by the adsorbent, and heat generated by the adsorption is absorbed by the refrigerant. The second air that gave the moisture to the adsorbent of the second adsorption heat exchanger (15) sequentially flows through the sixth flow port (76), the third intermediate passage (57), the third communication port (63), and the outward discharge passage (53), enters the duct through the outward discharge port (33), and is discharged outside the room.

In the second operation of the humidification/ventilation operation, as shown in FIG. 7, the second flow port (72), the third flow port (73), the fifth flow port (75), and the eighth flow port (78) are opened, and the first flow port (71), the fourth flow port (74), the sixth flow port (76), and the seventh flow port (77) are closed. The refrigerant circuit (11) enters the state shown in FIG. 5(A), in which the second adsorption heat exchanger (15) functions as a condenser, and the first adsorption heat exchanger (14) functions as an evaporator.

As shown in FIG. 7, the first air that entered the outside air inlet passage (51) through the outside air inlet port (31) sequentially flows through the outside air filter (36), the first communication port (61), the first intermediate passage (55), and the fifth flow port (75) to enter the second humidity control chamber (66), and passes through the second adsorption heat exchanger (15). In the second adsorption heat exchanger (15), moisture is desorbed from the adsorbent heated by the refrigerant, and the desorbed moisture is given to the first air. The first air humidified by the second adsorption heat exchanger (15) sequentially flows through the eighth flow port (78), the fourth intermediate passage (58), the fourth communication port (64), and the inward supply passage (54), enters the duct through the inward supply port (34), and is supplied to the inside of the room.

The second air that entered the room air inlet passage (52) through the room air inlet port (32) sequentially flows through the room air filter (37), the second communication port (62), the second intermediate passage (56), and the third flow port (73) to enter the first humidity control chamber (65), and passes through the first adsorption heat exchanger (14). In the first adsorption heat exchanger (14), moisture in the second air is adsorbed by the adsorbent, and heat generated by the adsorption is absorbed by the refrigerant. The second air that gave the moisture to the adsorbent of the first adsorption heat exchanger (14) sequentially flows through the second flow port (72), the third intermediate passage (57), the third communication port (63), and the outward discharge passage (53), enters the duct through the outward discharge port (33), and is discharged outside the room.

### <Dehumidification/Circulation Operation>

In the humidity control apparatus (10) performing the dehumidification/circulation operation, first operation and second operation described later are alternately performed at predetermined time intervals (e.g., every three minutes).

When the supply fan (30) of the humidity control apparatus (10) is operated during the dehumidification/circulation operation, the room air enters the casing (20) through the room air inlet port (32) as first air. When the discharge fan (29) is operated, the outside air enters the casing (20) through the outside air inlet port (31) as second air.

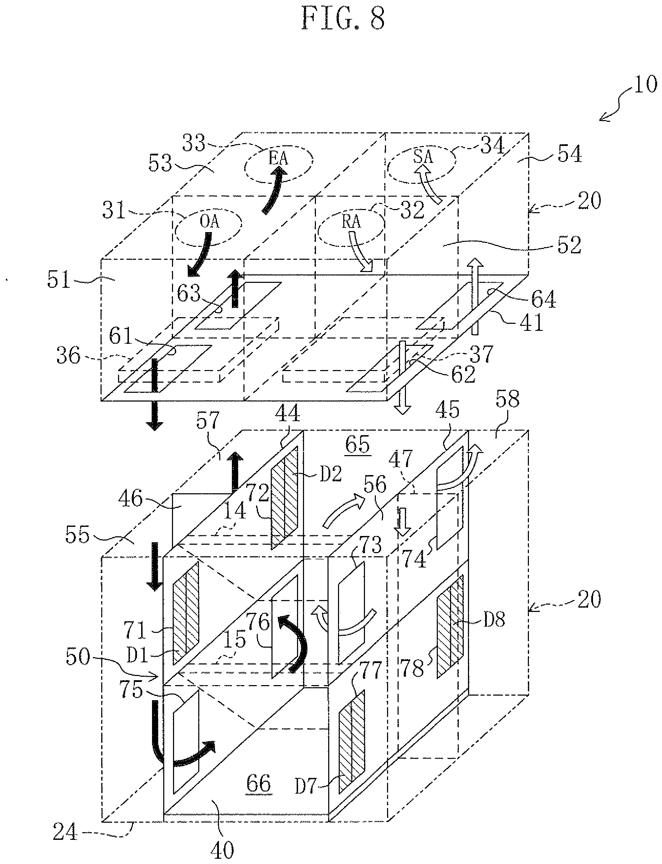

In the first operation of the dehumidification/circulation operation, as shown in FIG. 8, the third flow port (73), the fourth flow port (74), the fifth flow port (75), and the sixth flow port (76) are opened, and the first flow port (71), the second flow port (72), the seventh flow port (77), and the eighth flow port (78) are closed. The refrigerant circuit (11) enters the state shown in FIG. 5(A), in which the second adsorption heat exchanger (15) functions as a condenser, and the first adsorption heat exchanger (14) functions as an evaporator.

As shown in FIG. 8, the first air that entered the room air inlet passage (52) through the room air inlet port (32) sequentially flows through the room air filter (37), the second communication port (62), the second intermediate passage (56), and the third flow port (73) to enter the first humidity control chamber (65), and passes through the first adsorption heat exchanger (14). In the first adsorption heat exchanger (14), moisture in the first air is adsorbed by the adsorbent, and heat generated by the adsorption is absorbed by the refrigerant. The first air dehumidified by the first adsorption heat exchanger (14) sequentially flows through the fourth flow port (74), the fourth intermediate passage (58), the fourth communication port (64), and the inward supply passage (54), enters the duct through the inward supply port (34), and is supplied to the inside of the room.

The second air that entered the outside air inlet passage (51) through the outside air inlet port (31) sequentially flows through the outside air filter (36), the first communication port (61), the first intermediate passage (55), and the fifth flow port (75) to enter the second humidity control chamber (66), and passes through the second adsorption heat exchanger (15). In the second adsorption heat exchanger (15), moisture is desorbed from the adsorbent heated by the refrigerant, and the desorbed moisture is given to the second air. The second air used for the recovery of the adsorbent of the second adsorption heat exchanger (15) sequentially flows through the sixth flow port (76), the third intermediate passage (57), the third communication port (63), and the outward discharge passage (53), enters the duct through the outward discharge port (33), and is discharged outside the room.

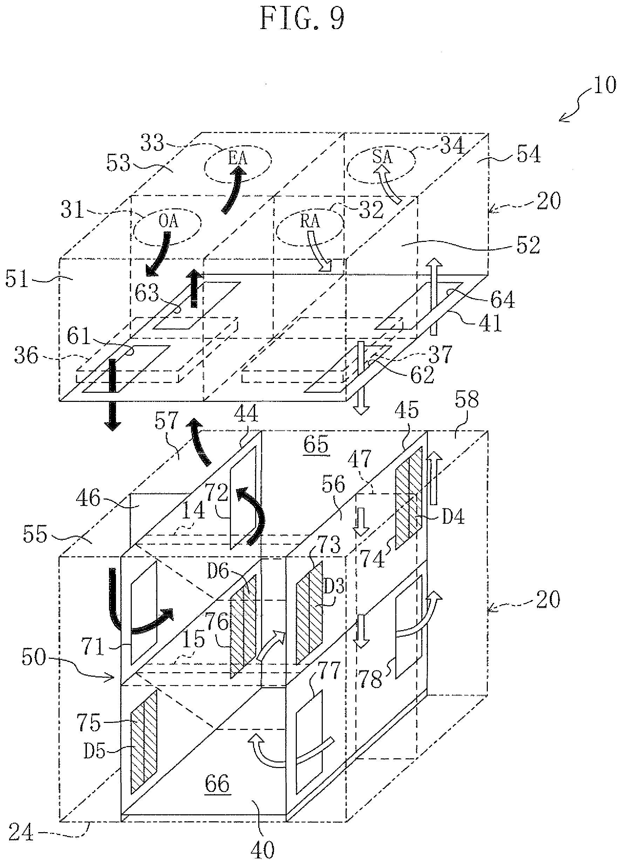

In the second operation of the dehumidification/circulation operation, as shown in FIG. 9, the first flow port (71), the second flow port (72), the seventh flow port (77), and the eighth flow port (78) are opened, and the third flow port (73), the fourth flow port (74), the fifth flow port (75), and the sixth flow port (76) are closed. The refrigerant circuit (11) enters the state shown in FIG. 5(B), in which the first adsorption heat exchanger (14) functions as a condenser, and the second adsorption heat exchanger (15) functions as an evaporator.

As shown in FIG. 9, the first air that entered the room air inlet passage (52) through the room air inlet port (32) sequentially flows through the room air filter (37), the second communication port (62), the second intermediate passage (56), and the seventh flow port (77) to enter the second humidity control chamber (66), and passes through the second adsorption heat exchanger (15). In the second adsorption heat exchanger (15), moisture in the first air is adsorbed by the adsorbent, and heat generated by the adsorption is absorbed by the refrigerant. The first air dehumidified by the second adsorption heat exchanger (15) sequentially flows through the eighth flow port (78), the fourth intermediate passage (58), the fourth communication port (64), and the inward supply passage (54), enters the duct through the inward supply port (34), and is supplied to the inside of the room.

The second air that entered the outside air inlet passage (51) through the outside air inlet port (31) sequentially flows through the outside air filter (36), the first communication port (61), the first intermediate passage (55), and the first flow port (71) to enter the first humidity control chamber (65), and passes through the first adsorption heat exchanger (14). In the first adsorption heat exchanger (14), moisture is desorbed from the adsorbent heated by the refrigerant, and the desorbed moisture is given to the second air. The second air used for the recovery of the first adsorption heat exchanger (14) sequentially flows through the second flow port (72), the third intermediate passage (57), the third communication port (63), and the outward discharge passage (53), enters the duct through the outward discharge port (33), and is discharged outside the room.

### <Humidification/Circulation Operation>

In the humidity control apparatus (10) performing the humidification/circulation operation, first operation and second operation described later are alternately performed at predetermined time intervals (e.g., every three minutes).

When the supply fan (30) of the humidity control apparatus (10) is operated during the humidification/circulation operation, the room air enters the casing (20) through the room air inlet port (32) as first air. When the discharge fan (29) is operated, the outside air enters the casing (20) through the outside air inlet port (31) as second air.

In the first operation of the humidification/circulation operation, as shown in FIG. 8, the third flow port (73), the fourth flow port (74), the fifth flow port (75), and the sixth flow port (76) are opened, and the first flow port (71), the second flow port (72), the seventh flow port (77), and the eighth flow port (78) are closed. The refrigerant circuit (11) enters the state shown in FIG. 5(B), in which the first adsorption heat exchanger (14) functions as a condenser, and the second adsorption heat exchanger (15) functions as an evaporator.

As shown in FIG. 8, the first air that entered the room air inlet passage (52) through the room air inlet port (32) sequentially flows through the room air filter (37), the second communication port (62), the second intermediate passage (56), and the third flow port (73) to enter the first humidity control chamber (65), and passes through the first adsorption heat exchanger (14). In the first adsorption heat exchanger (14), moisture is desorbed from the adsorbent heated by the refrigerant, and the desorbed moisture is given to the first air. The first air humidified by the first adsorption heat exchanger (14) sequentially flows through the fourth flow port (74), the fourth intermediate passage (58), the fourth communication port (64), and the inward supply passage (54), enters the duct through the inward supply port (34), and is supplied to the inside of the room.

The second air that entered the outside air inlet passage (51) through the outside air inlet port (31) sequentially flows through the outside air filter (36), the first communication port (61), the first intermediate passage (55), and the fifth flow port (75) to enter the second humidity control chamber (66), and passes through the second adsorption heat exchanger (15). In the second adsorption heat exchanger (15), moisture in the second air is adsorbed by the adsorbent, and heat generated by the adsorption is absorbed by the refrigerant. The second air that gave the moisture to the adsorbent of the second adsorption heat exchanger (15) sequentially flows through the sixth flow port (76), the third intermediate passage (57), the third communication port (63), and the outward discharge passage (53), enters the duct through the outward discharge port (33), and is discharged outside the room.

In the second operation of the humidification/circulation operation, as shown in FIG. 9, the first flow port (71), the second flow port (72), the seventh flow port (77), and the eighth flow port (78) are opened, and the third flow port (73), the fourth flow port (74), the fifth flow port (75), and the sixth flow port (76) are closed. The refrigerant circuit (11) enters the state shown in FIG. 5(A), in which the second adsorption heat exchanger (15) functions as a condenser, and the first adsorption heat exchanger (14) functions as an evaporator.

As shown in FIG. 9, the first air that entered the room air inlet passage (52) through the room air inlet port (32) sequentially flows through the room air filter (37), the second communication port (62), the second intermediate passage (56), and the seventh flow port (77) to enter the second humidity control chamber (66), and passes through the second adsorption heat exchanger (15). In the second adsorption heat exchanger (15), moisture is desorbed from the adsorbent heated by the refrigerant, and the desorbed moisture is given to the first air. The first air humidified by the second adsorption heat exchanger (15) sequentially flows through the eighth flow port (78), the fourth intermediate passage (58), the fourth communication port (64), and the inward supply passage (54), enters the duct through the inward supply port (34), and is supplied to the inside of the room.

The second air that entered the outside air inlet passage (51) through the outside air inlet port (31) sequentially flows through the outside air filter (36), the first communication port (61), the first intermediate passage (55), and the first flow port (71) to enter the first humidity control chamber (65), and passes through the first adsorption heat exchanger (14). In the first adsorption heat exchanger (14), moisture in the second air is adsorbed by the adsorbent, and heat generated by the adsorption is absorbed by the refrigerant. The second air that gave the moisture to the adsorbent of the first adsorption heat exchanger (14) sequentially flows through the second flow port (72), the third intermediate passage (57), the third communication port (63), and the outward discharge passage (53), enters the duct through the outward discharge port (33), and is discharged outside the room.

### -Maintenance of Humidity Control Apparatus-

As described above, the humidity control apparatus (10) is contained in the storage space (S) of the closet, and is installed on the floor. Accordingly, in the state shown in FIG. 1, space for maintenance is provided only in front of the humidity control apparatus (10). In the humidity control apparatus (10), maintenance of the components can be performed from the front side of the humidity control apparatus (10) by detaching the front cover (22) of the casing (20).

Specifically, for replacement or cleaning of the outside air filter (36) and the room air filter (37), the open/close lid (22b) of the front cover (22) is detached to uncover the opening (22a). Thus, the outside air filter (36) and the room air filter (37) are exposed outside the casing (20) through the opening (22a). In this state, a user, etc., can easily draw the outside air filter (36) and the room air filter (37) out of the casing by sliding the filters (36, 37) forward. Then, the cleaned or replaced filters (36, 37) are inserted in the casing (20) through the opening (22a), thereby returning the filters (36, 37) to the original positions. In the first embodiment, the outside air filter (36) and the room air filter (37) are configured as separate members. However, the filters (36, 37) can be integrated as a unit extending in both of the outside air inlet passage (51) and the room air inlet passage (52). In this case, the filters can be drawn out together as the filter unit for the maintenance.

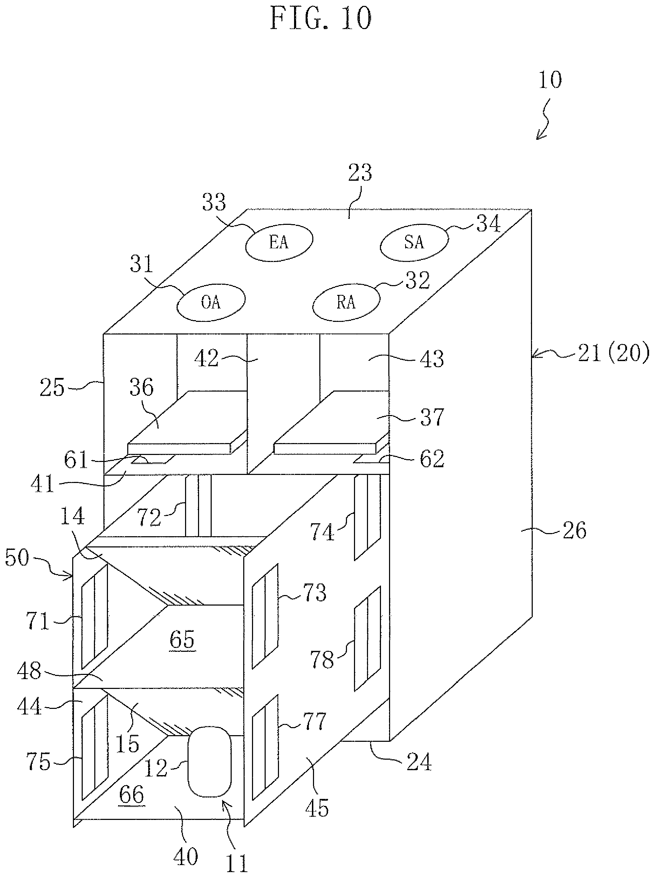

For maintenance of the other components in the casing (20), the front cover (22) is detached from the casing body (21). This exposes the drawer unit (50) outside the casing (20). In this state, a maintenance worker, etc., slides the drawer unit (50) forward (see FIG. 10). Thus, the first divider plate (44), the second divider plate (45), the support plate (40), and the central divider plate (48) are drawn out forward. Simultaneously, the components of the refrigerant circuit (11) and the refrigerant pipes held in the drawer unit (50) are also drawn out forward.

With the drawer unit (50) drawn out of the casing (20) in this way, maintenance of the compressor (12), the adsorption heat exchangers (14, 15), the motor-operated expansion valve (18), the refrigerant pipes, etc., is performed. In this state, the dampers (D1-D8) arranged on the first and second divider plates (44, 45) are also drawn out. Therefore, the worker, etc., can easily perform the maintenance of the dampers (D1-D8).

### -Advantages of First Embodiment-

In the first embodiment, the adsorption heat exchangers (14, 15) as an adsorption member for controlling humidity of the air, and the other components and the refrigerant pipes, etc., of the refrigerant circuit (11) are integrally held in the drawer unit (50), and the drawer unit (50) can be drawn out of the casing (20). Therefore, the maintenance worker can draw out the components out of the casing (20) merely by drawing the drawer unit (50) out. This allows for easy maintenance of the adsorption heat exchangers (14, 15), etc. In drawing the drawer unit (50) out, the worker does not have to detach and connect the refrigerant pipes. This can greatly improve the ease of maintenance of the humidity control apparatus.

The arrangement of the compressor (12) inside the second humidity control chamber (66) allows for reduction of space for containing the compressor (12), thereby downsizing of the casing (20). Further, a distance between the compressor (12) and the adsorption heat exchangers (14, 15) is relatively reduced. Therefore, with the relatively simple structure, the compressor (12) and the adsorption heat exchangers (14, 15) held in the holding member (50) can be drawn out together. In addition, the refrigerant pipes connecting the compressor (12) and the adsorption heat exchangers (14, 15) can be shortened.

The outside air inlet port (31), the outward discharge port (33), the room air inlet port (32), and the inward supply port (34) are gathered on the top plate (23) of the casing (20). Accordingly, as shown in FIG. 1, for example, the humidity control apparatus (10) can be installed on the floor in the storage space (S) of the closet, and the ducts (5) connected to the duct connection ports (31, 32, 33, 34) can extend upward (toward the ceiling). Specifically, the ducts would not be routed horizontally around the humidity control apparatus (10) of the first embodiment. This can drastically reduce space required for installation of the humidity control apparatus (10) in the horizontal direction. Further, as compared with the humidity control apparatus installed on the ceiling, for example, the humidity control apparatus (10) installed on the floor allows for easier maintenance the apparatus by the user.

The front cover (22) is detachably attached to the front side of the casing (20). Therefore, even if the humidity control apparatus (10) is installed in the closet, maintenance of the components can easily be performed by detaching the front cover (22).

### [Second Embodiment out of the scope of the Invention]

The structure of a humidity control apparatus (10) of a second embodiment is different from that of the humidity control apparatus of the first embodiment. The difference between the humidity control apparatus (10) of the second embodiment and that of the first embodiment will be described below. The humidity control apparatus (10) of the second embodiment includes a flat, vertical casing (20), and is installed on a ceiling, for example.

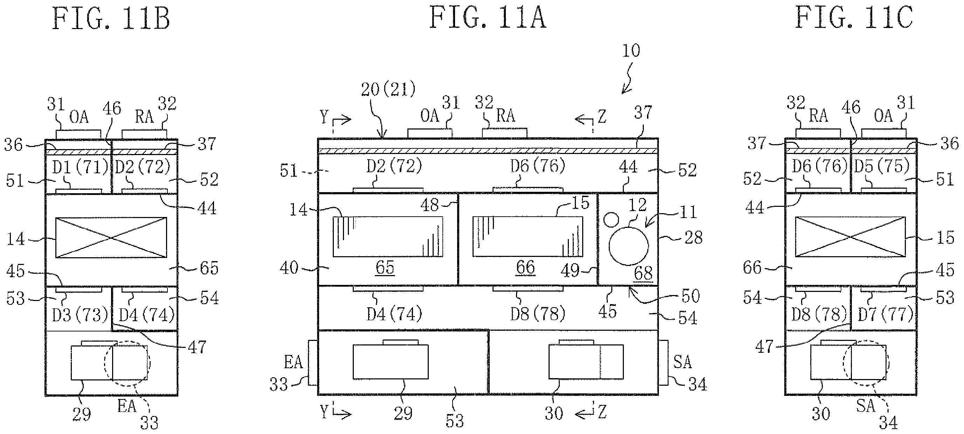

As shown in FIG. 11, the casing (20) includes an outside air inlet port (31) formed in a lower center portion of a front side thereof (in an upper side in FIG. 11(A)), and a room air inlet port (32) formed in a lower center portion of the front side thereof. The casing (20) further includes an outward discharge port (33) formed in a rear portion of a left side thereof, and an inward supply port (34) formed in a rear portion of a right side thereof. On the right side of the casing (20), a side cover (28) is detachably attached to the casing body (21).

Space inside the casing (20) is divided into three rooms by a first divider plate (44) and a second divider plate (45) in the front-back direction. A front room in the three rooms is horizontally divided by a third divider plate (46) in such a manner that a lower room constitutes an outside air inlet passage (51), and an upper room constitutes a room air inlet passage (52). The outside air inlet passage (51) contains an outside air filter (36), and the room air inlet passage (52) contains a room air filter (37).

A rear room in the three rooms is horizontally divided by a fourth divider plate (47) in such a manner that a lower room constitutes an outward discharge passage (53), and an upper room constitutes an inward supply passage (54). A discharge fan (29) is arranged in a downstream portion of the outward discharge passage (53), and a supply fan (30) is arranged in a downstream portion of the inward supply passage (54).

A center room in the three rooms is vertically divided into three rooms by a central divider plate (48) and an equipment room divider plate (49), thereby providing a first humidity control chamber (65), a second humidity control chamber (66), and an equipment chamber (68) from the left to the right. On a bottom side of the casing (20), a support plate (40) is formed to extend below the first humidity control chamber (65), the second humidity control chamber (66), and the equipment chamber (68). The support plate (40) is formed along a bottom surface of the casing (20), and is slidable in the lateral direction.

The first humidity control chamber (65) contains a first adsorption heat exchanger (14), and the second humidity control chamber (66) contains a second adsorption heat exchanger (15). The equipment chamber (68) contains the compressor (12). The refrigerant circuit (11) of the second embodiment is formed to extend in the first humidity control chamber (65), the second humidity control chamber (66), and the equipment chamber (68).

The first divider plate (44) includes a first flow port (71) and a first damper (D1) provided in a lower left portion thereof, a second flow port (72) and a second damper (D2) provided in an upper left portion thereof, a fifth flow port (75) and a fifth damper (D5) provided in a lower right portion thereof, and a sixth flow port (76) and a sixth damper (D6) provided in an upper right portion thereof. The second divider plate (45) includes a third flow port (73) and a third damper (D3) provided in a lower left portion thereof, a fourth flow port (74) and a fourth damper (D4) provided in an upper left portion thereof, a seventh flow port (77) and a seventh damper (D7) provided in a lower right portion thereof, and an eighth flow port (78) and an eighth damper (D8) provided in an upper right portion thereof.

Like the first embodiment, the humidity control apparatus (10) of the second embodiment can perform the "dehumidification/ventilation operation," "humidification/ventilation operation," "dehumidification/circulation operation," "humidification/circulation operation." Specifically, in the humidity control apparatus (10) of the second embodiment, the above-described operations are performed according to the switching of the open/close state of the dampers (D1-D8), and the setting of the four-way switching valve (13).

In the second embodiment, the support plate (40), the first divider plate (44), the second divider plate (45), the central divider plate (48), and the equipment chamber divider plate (49) are integrally coupled to constitute a drawer unit (50). Like the first embodiment, the drawer unit (50) holds the components and the refrigerant pipes of the refrigerant circuit (11) together. In the second embodiment, maintenance of the components is performed by drawing the drawer unit (50) out to the right.

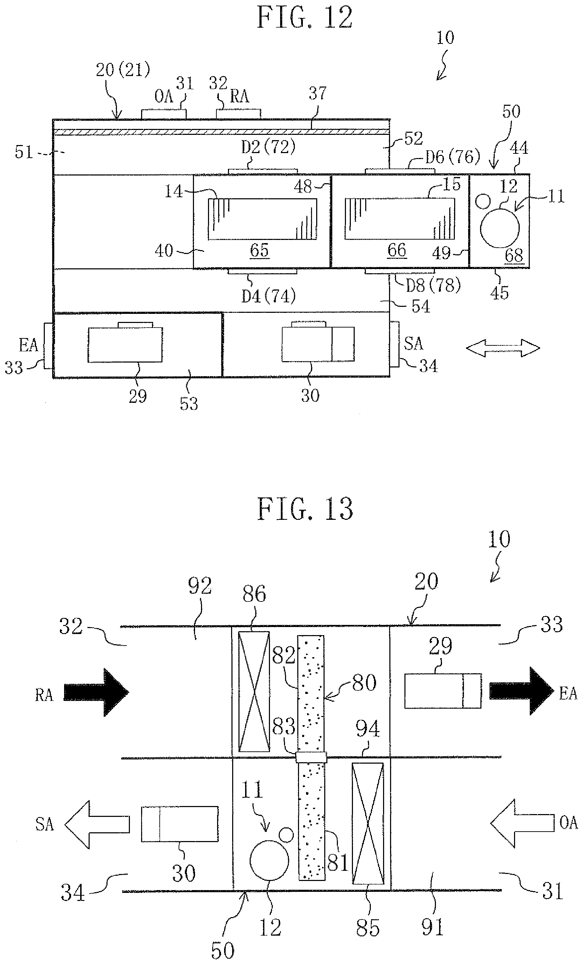

Specifically, the side cover (28) is detached from the casing body (21), thereby exposing the drawer unit (50) outside the casing (20). In this state, the drawer unit (50) is laterally drawn out. Thus, the components and the refrigerant pipes of the refrigerant circuit (11) held in the drawer unit (50) are laterally drawn out of the casing (see FIG. 12).

With the drawer unit (50) drawn out of the casing (20) in this way, maintenance of the compressor (12), the adsorption heat exchangers (14, 15), the motor-operated expansion valve (18), the refrigerant pipes, etc., is performed. In this state, the dampers (D1-D8) provided on the divider plates (44, 45) are also drawn out. Therefore, the worker, etc., can easily perform the maintenance of the dampers (D1-D8).

### [Third Embodiment out of the scope of the Invention]

The structure of a humidity control apparatus (10) of a third embodiment is different from those of the humidity control apparatuses of the first and second embodiments. The humidity control apparatus (10) of the third embodiment humidifies or dehumidifies the air using a rotatable desiccant rotor (80). This humidity control apparatus (10) constitutes a ventilation humidity control apparatus in which humidity of outside air (OA) is controlled, and the humidity-controlled air is supplied to the inside of the room as supply air (SA), and simultaneously, room air (RA) is discharged outside the room as exhaust air (EA).

Specifically, as shown in FIG. 13, the humidity control apparatus (10) includes a casing (20), in which a first air passage (91) and a second air passage (92) are provided. An outside air inlet port (31) is formed on an entrance side of the first air passage (91), and an inward supply port (34) is formed on an exit side of the first air passage (91). A room air inlet port (32) is formed on an entrance side of the second air passage (92), and an outward discharge port (33) is formed on an exit side of the second air passage (92).

The desiccant rotor (80) carries an adsorbent on a surface of a disc-shaped base, thereby constituting an adsorption member. The desiccant rotor (80) is arranged to extend across the first air passage (91) and the second air passage (92) in such a manner that about a radial half of the desiccant rotor is located in the first air passage (91), and the other radial half is located in the second air passage (92). The section of the desiccant rotor (80) located in the first air passage (91) constitutes a first section (81), and the section located in the second air passage (92) constitutes a second section (82). A rotation shaft (83) penetrates an axial center of the desiccant rotor (80), and is fixed thereto. The rotation shaft (83) is driven by a motor, etc., which is not shown. Thus, the desiccant rotor (80) is configured to rotate in both of the air passages (91, 92).

The humidity control apparatus (10) includes a refrigerant circuit (11) as a heating medium circuit. The refrigerant circuit (11) connects a compressor (12), a first heat exchanger (85), a second heat exchanger (86), and a motor-operated expansion valve, etc., which is not shown. A refrigerant as a heating fluid medium circulates in the refrigerant circuit (11) to perform a vapor compression refrigeration cycle. The refrigerant circuit (11) further includes a four-way switching valve which is not shown. The refrigerant circuit (11) can perform operation in which the first heat exchanger (85) functions as an evaporator, and the second heat exchanger (86) functions as a condenser, and another operation in which the first heat exchanger (85) functions as the condenser, and the second heat exchanger (86) functions as the evaporator by switching the setting of the four-way switching valve.

In an example shown in FIG. 13, the first heat exchanger (85) is arranged in the first air passage (91), and the second heat exchanger (86) is arranged in the second air passage (92). The first heat exchanger (85) and the second heat exchanger (86) are arranged upstream of the desiccant rotor (80). In this example, the compressor (12) is arranged in the first air passage (91) downstream of the desiccant rotor (80). The compressor (12) may be arranged in the first air passage (91) upstream of the desiccant rotor (80), or may be arranged in the second air passage (92) upstream or downstream of the desiccant rotor (80). The first air passage (91) contains a supply fan (30) near the inward supply port (34), and the second air passage (92) contains a discharge fan (29) near the outward discharge port (33).

The humidity control apparatus (10) of the third embodiment includes the drawer unit (50) holding the desiccant rotor (80) and the refrigerant circuit (11) together. The drawer unit (50) holds the compressor (12), the first heat exchanger (85), the second heat exchanger (86), the motor-operated expansion valve, the four-way switching valve, the desiccant rotor (80), etc. The drawer unit (50) also holds the refrigerant pipes of the refrigerant circuit (11), the rotation shaft (83), the motor, etc. Further, the drawer unit (50) also holds a divider section (94) for providing the first air passage (91) and the second air passage (92) near the desiccant rotor (80). The drawer unit (50) is configured to be drawn out of the casing (20) from one of side surfaces of the casing (20). Specifically, in this example, the drawer unit (50) is slidable in a direction orthogonal to the air passages (91, 92), and can be drawn out of the casing (20).

When the supply fan (30) is operated during the operation of the humidity control apparatus (10), the outside air (OA) enters the first air passage (91) in the casing (20) through the outside air inlet port (31) as first air. When the discharge fan (29) is operated, the room air (RA) enters the second air passage (92) in the casing (20) through the room air inlet port (32) as second air.

In dehumidification operation of the humidity control apparatus (10), the first heat exchanger (85) functions as an evaporator, and the second heat exchanger (86) functions as a condenser according to the setting of the four-way switching valve. The air flowing through the first air passage (91) is cooled in the first heat exchanger (85), and passes through the first section (81) of the desiccant rotor (80). Then, the adsorbent on the first section (81) adsorbs moisture in the air. Specifically, in the humidification operation, the air is dehumidified by the first section (81) of the desiccant rotor (80). The air dehumidified by the desiccant rotor (80) is supplied to the inside of the room through the inward supply port (34). The air flowing through the second air passage (92) is heated in the second heat exchanger (86), and passes through the second section (82) of the desiccant rotor (80). Then, moisture adsorbed by the adsorbent on the second section (82) is desorbed. Specifically, in the dehumidification operation, the adsorbent on the second section (82) of the desiccant rotor (80) is recovered. The air used for the recovery of the adsorbent of the desiccant rotor (80) is discharged outside the room through the outward discharge port (33).

In the humidification operation of the humidity control apparatus (10), the first heat exchanger (85) functions as a condenser, and the second heat exchanger (86) functions as an evaporator according to the setting of the four-way switching valve. The air flowing through the first air passage (91) is heated in the first heat exchanger (85), and passes through the first section (81) of the desiccant rotor (80). Then, moisture adsorbed by the adsorbent on the first section (81) is desorbed. Specifically, in the humidification operation, the air is humidified by the first section (81) of the desiccant rotor (80). The air humidified by the desiccant rotor (80) is supplied to the inside of the room through the inward supply port (34). The air flowing through the second air passage (92) is cooled in the second heat exchanger (86), and passes through the second section (82) of the desiccant rotor (80). Then, moisture in the air is adsorbed by the adsorbent on the second section (82). Specifically, in the humidification operation, the moisture in the air is given to the adsorbent on the second section (82) of the desiccant rotor (80). The air that gave the moisture to the adsorbent on the desiccant rotor (80) is discharged outside the room through the outward discharge port (33).

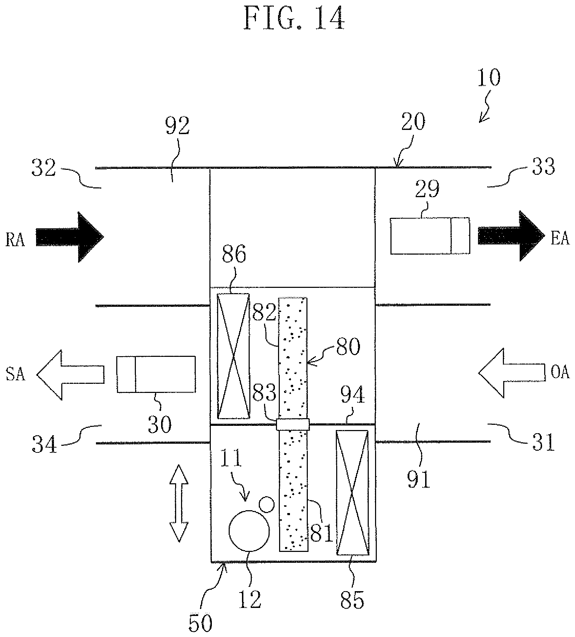

For maintenance of the humidity control apparatus (10) of the third embodiment, the drawer unit (50) is drawn out of the casing (20) by sliding the drawer unit (50) in the direction orthogonal to the air passages (91, 92). Thus, the components of the refrigerant circuit (11), the desiccant rotor (80), etc., held in the drawer unit (50) are drawn out in the lateral direction (see FIG. 14). With the drawer unit (50) drawn out of the casing (20) in this way, maintenance of the components of the refrigerant circuit (11), and the desiccant rotor (80) is performed.

### [Fourth Embodiment within the scope of the Invention]

A humidity control apparatus (10) of a fourth embodiment of the invention is an on-floor humidity control apparatus installed on a floor of a room to control air humidity in a room. As shown in FIG. 1, the humidity control apparatus (10) is configured to be installed in storage space (S) of the closet for storing clothes, etc.

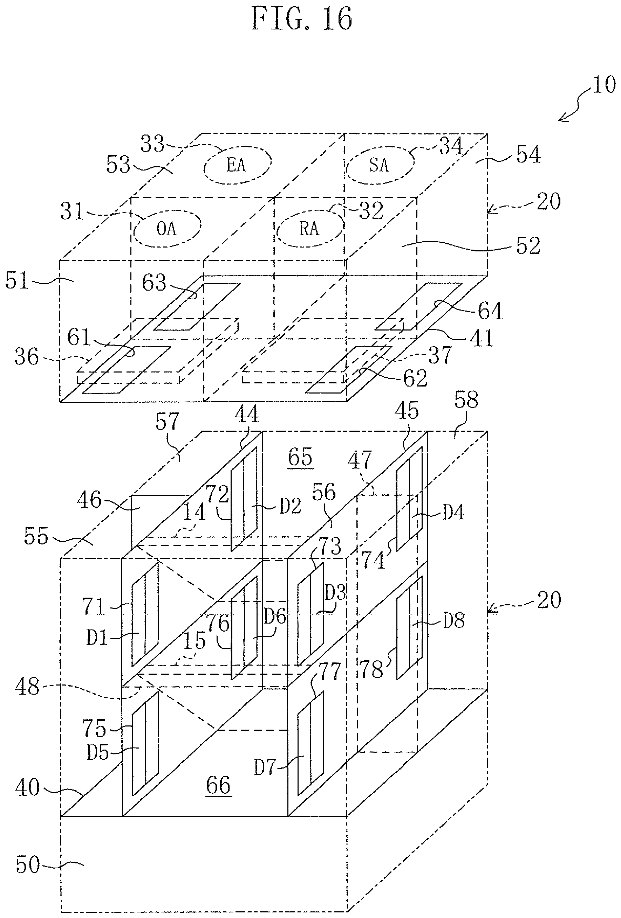

As shown in FIGS. 1, 15, and 16, the humidity control apparatus (10) includes a casing (20) in the shape of a vertically oriented rectangular parallelepiped. In a perspective view of FIG. 16 (and in the other perspective views), an upper portion of the casing (20) and the other portion are divided for the sake of convenience. The casing (20) includes a box-shaped casing body (21) with only a front surface thereof being opened, and a front cover (22) detachably attached to the front opening of the casing body (21).

The casing body (21) includes a top plate (23) on an upper end thereof, and a bottom plate (24) on a lower end thereof. The casing body (21) includes a right plate (25) on a right end thereof, and a left plate (26) on a left end thereof. Further, the casing body (21) includes a rear plate (27) on a rear end thereof.

The top plate (23) includes four duct connection ports (31, 32, 33, 34). The duct connection ports (31, 32, 33, 34) are arranged to be adjacent to each other so as to correspond to four corners of the top plate (23). Specifically, the four duct connection ports (31, 32, 33, 34) includes an outside air inlet port (31) arranged in a front right portion of the top plate (23), a room air inlet port (32) arranged in a front left portion of the top plate (23), an outward discharge port (33) arranged in a rear right portion of the top plate (23), and an inward supply port (34) arranged in a rear left portion of the top plate (23). That is, the outside air inlet port (31), the room air inlet port (32), the outward discharge port (33), and the inward supply port (34) are gathered on the top plate of the casing body (21).

Ducts (5) through which the air can flow are connected to the duct connection ports (31, 32, 33, 34), respectively (see FIG 1). Each of the ducts (5) extends upward toward a ceiling of the room, and runs above the ceiling to reach a predetermined space. The outside air inlet port (31) and the outward discharge port (33) communicate with the outside of the room through the ducts (5), and the room air inlet port (32) and the inward supply port (34) communicate with the inside of the room through the ducts (5). The outside air inlet port (31) constitutes an opening for sucking outside air (OA) in the casing (20), and the room air inlet port (32) constitutes an opening for introducing room air (RA) in the casing (20). The outward discharge port (33) constitutes an opening for discharging the air in the casing (20) outside the room as exhaust air (EA), and the inward supply port (34) constitutes an opening for supplying the air in the casing (20) inside the room as supply air (SA).

The front cover (22) is detachably attached to the casing body (21) so as to cover the front opening of the casing body (21). The front cover (22) includes a control switch (not shown) for allowing a user, etc., to switch the operation of the humidity control apparatus (10). In an upper portion of the front cover (22), an opening (22a) through which filters (36, 37) described later can be drawn out, and an open/close lid (22b) capable of opening/closing the opening (22a) are provided. The open/close lid (22b) is detachably attached to the front cover (22).

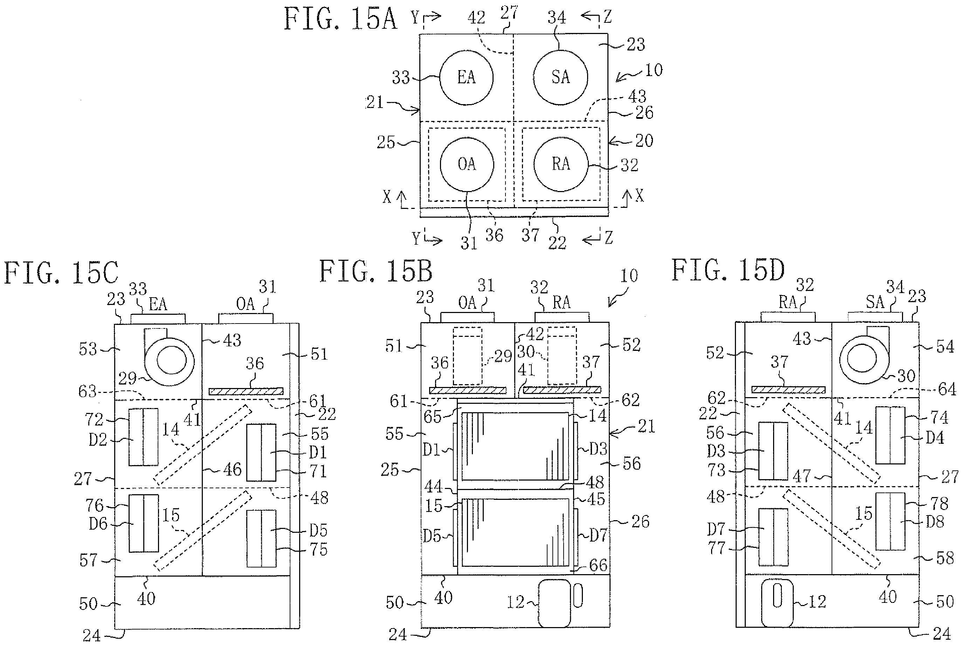

As shown in FIGS. 15 and 16, with the front cover (22) attached to the casing body (21), a rectangular parallelepiped room is formed in the casing (20). A lower divider plate (40) is arranged in the casing (20) near the lower side of the casing (20), and an upper divider plate (41) is arranged in the casing (20) near the upper side of the casing (20). The lower divider plate (40) and the upper divider plate (41) are rectangular plates, and are horizontally supported by the casing (20).

A flat, rectangular parallelepiped equipment chamber (50) is provided between the lower divider plate (40) and the bottom plate (24). The equipment chamber (50) contains a compressor (12), a four-way switching valve (13), etc., connected to a refrigerant circuit (11) described later. The compressor (12) is a vertically installed compressor, and is arranged on the bottom plate (24). The compressor (12) is constituted of, for example, a scroll type or a rotary type compressor, etc.

A flat, rectangular parallelepiped room is provided between the upper divider plate (41) and the top plate (23). In this room, a longitudinal divider plate (42), and a lateral divider plate (43) are provided. The longitudinal divider plate (42) is in the shape of a plate having a long side extending in the front-back direction, and the lateral divider plate (43) is in the shape of a plate having a long side extending in the lateral direction. The longitudinal divider plate (42) and the lateral divider plate (43) are perpendicularly supported by the casing (20) to be orthogonal to each other. The longitudinal divider plate (42) and the lateral divider plate (43) divide the room between the upper divider plate (41) and the top plate (23) into four passages (51, 52, 53, 54). The four passages include an outside air inlet passage (51), a room air inlet passage (52), an outward discharge passage (53), and an inward supply passage (54).

The outside air inlet passage (51) is provided in a front right portion of the casing (20), and the room air inlet passage (52) is provided in a front left portion of the casing (20). The outward discharge passage (53) is provided in a rear right portion of the casing (20), and the inward supply passage (54) is provided in a rear left portion of the casing (20). The upper divider plate (41) is provided with a first communication port (61) facing the outside air inlet passage (51), a second communication port (62) facing the room air inlet passage (52), a third communication port (63) facing the outward discharge passage (53), and a fourth communication port (64) facing the inward supply passage (54).

The outside air inlet port (31) communicates with the first communication port (61) through the outside air inlet passage (51), and the room air inlet port (32) communicates with the second communication port (62) through the room air inlet passage (52). The outward discharge port (33) communicates with the third communication port (63) through the outward discharge passage (53), and the inward supply port (34) communicates with the fourth communication port (64) with the inward supply passage (54).

An outside air filter (36) is arranged in the outside air inlet passage (51), and a room air filter (37) is arranged in the room air inlet passage (52). Specifically, the outside air filter (36) constitutes a first filter arranged below the outside air inlet port (31), and the room air filter (37) constitutes a second filter arranged below the room air inlet port (32). Each of the filters (36, 37) is in the shape of a plate or a sheet, and is kept in a horizontal position to cover every part of a lateral cross section of the corresponding inlet passage (51, 52). The filters (36, 37) are arranged to be able to move back and forth in the corresponding inlet passages (51, 52).

The outward discharge passage (53) contains a discharge fan (29), and the inward supply passage (54) contains a supply fan (30) (see FIG. 15). The fans (29, 30) are centrifugal multi-blade fans (so-called sirocco fans). In the perspective view of FIG. 16 (and in the other perspective views), the fans (29, 30) are not shown. The discharge fan (29) blows the air introduced through the third communication port (63) toward the outward discharge port (33). The supply fan (30) blows the air introduced through the fourth communication port (64) toward the inward supply port (34).

A rectangular parallelepiped room is provided between the lower divider plate (40) and the upper divider plate (41). A first divider plate (44) and a second divider plate (45) are arranged in this room. The first divider plate (44) and the second divider plate (45) extend from the lower divider plate (40) to the upper divider plate (41), and are perpendicularly supported by the casing (20) to be parallel to the right and left plates (25, 26) of the casing (20). The first divider plate (44) and the second divider plate (45) divide the room between the lower divider plate (40) and the upper divider plate (41) into three rooms.

A right room in the three rooms is divided by a third divider plate (46) into two rooms aligned in the front-back direction. A left room in the three rooms is divided by a fourth divider plate (47) into two rooms aligned in the front-back direction. The room in front of the third divider plate (46) constitutes a first intermediate passage (55), and the room in front of the fourth divider plate (47) constitutes a second intermediate passage (56). The room behind the third divider plate (46) constitutes a third intermediate passage (57), and the room behind the fourth divider plate (47) constitutes a fourth intermediate passage (58).

An upper end of the first intermediate passage (55) communicates with the first communication port (61), an upper end of the second intermediate passage (56) communicates with the second communication port (62), an upper end of the third intermediate passage (57) communicates with the third communication port (63), and an upper end of the fourth intermediate passage (58) communicates with the fourth communication port (64). Lower ends of the intermediate passages (55, 56, 57, 58) are closed by the lower divider plate (40).

A center room in the three rooms is divided by a central divider plate (48) into two rooms aligned in the vertical direction. An upper room constitutes a first humidity control chamber (65), and a lower room constitutes a second humidity control chamber (66). Specifically, the first humidity control chamber (65) and the second humidity control chamber (66) are aligned in the vertical direction to be adjacent to each other with the central divider plate (48) interposed therebetween.

The first humidity control chamber (65) contains a first adsorption heat exchanger (14), and the second humidity control chamber (66) contains a second adsorption heat exchanger (15). The first adsorption heat exchanger (14) and the second adsorption heat exchanger (15) are connected in series to a refrigerant circuit (11) described in detail later.

As shown in FIG. 4, the adsorption heat exchangers (14, 15) are cross-fin type fin- and-tube heat exchangers, respectively. Each of the adsorption heat exchangers (14, 15) includes copper heat transfer tubes (16), and aluminum fins (17). Each of the fins (17) of the adsorption heat exchangers (14, 15) is in the shape of a rectangular plate, and they are arranged at regular intervals. The heat transfer tubes (16) extend in the direction of alignment of the fins (17) in serpentine form. That is, the heat transfer tube (16) includes straight parts penetrating the fins (17), and U-shaped parts connecting the adjacent straight parts, and they are alternately connected.

In each of the adsorption heat exchangers (14, 15), an adsorbent is carried on the surfaces of the fins (17), and the air passing through the fins (17) comes into contact with the adsorbent carried on the fins (17). The adsorbent may be a material capable of adsorbing vapor in the air, such as zeolite, silica gel, activated carbon, an organic polymer material having a hydrophilic functional group, etc.

Each of the adsorption heat exchangers (14, 15) of the fourth embodiment is arranged obliquely in the corresponding humidity control chambers (65, 66). Specifically, each of the adsorption heat exchangers (14, 15) is supported in the corresponding humidity control chambers (65, 66) in such a manner that the fins (17) are parallel to the first divider plate (44) and the second divider plate (45), and upper ends of the fins (17) are inclined forward relative to the perpendicular direction. Thus, the length of the fins (17) of the adsorption heat exchangers (14, 15) can be increased in the longitudinal direction, thereby increasing an area of the adsorption heat exchangers (14, 15) passed by the air. This increases efficiency in contact between the adsorbent and the air.

Each of the first divider plate (44) and the second divider plate (45) is provided with four flow ports through which the air enters or exits. Specifically, a first flow port (71) is formed in an upper front portion of the first divider plate (44), and a second flow port (72) is formed in an upper rear portion of the first divider plate (44). A third flow port (73) is formed in an upper front portion of the second divider plate (45), and a fourth flow port (74) is formed in an upper rear portion of the second divider plate (45). A fifth flow port (75) is formed in a lower front portion of the first divider plate (44), and a sixth flow port (76) is formed in a lower rear portion of the first divider plate (44). A seventh flow port (77) is formed in a lower front portion of the second divider plate (45), and an eighth flow port (78) is formed in a lower rear portion of the second divider plate (45).

The first flow port (71) allows the first intermediate passage (55) and the first humidity control chamber (65) to communicate with each other, the second flow port (72) allows the third intermediate passage (57) and the first humidity control chamber (65) to communicate with each other, the third flow port (73) allows the second intermediate passage (56) and the first humidity control chamber (65) to communicate with each other, the fourth flow port (74) allows the fourth intermediate passage (58) and the first humidity control chamber (65) to communicate with each other. The fifth flow port (75) allows the first intermediate passage (55) and the second humidity control chamber (66) to communicate with each other, the sixth flow port (76) allows the third intermediate passage (57) and the second humidity control chamber (66) to communicate with each other, the seventh flow port (77) allows the second intermediate passage (56) and the second humidity control chamber (66) to communicate with each other, and the eighth flow port (78) allows the fourth intermediate passage (58) and the second humidity control chamber (66) to communicate with each other.

Each of the first divider plate (44) and the second divider plate (45) includes four dampers for opening/closing the corresponding flow ports. Specifically, the first divider plate (44) includes a first damper (D1) for opening/closing the first flow port (71), a second damper (D2) for opening/closing the second flow port (72), a fifth damper (D5) for opening/closing the fifth flow port (75), and a sixth flow damper (D6) for opening/closing the sixth flow port (76). The second divider plate (45) includes a third damper (D3) for opening/closing the third flow port (73), a fourth damper (D4) for opening/closing the fourth flow port (74), a seventh damper (D7) for opening/closing the seventh flow port (77), and an eighth damper (D8) for opening/closing the eighth flow port (78).

Each of the dampers (D1-D8) includes, for example, two shutters, and a motor for rotating the shutters about a horizontal axis thereof. Specifically, each of the dampers (D1-D8) closes the corresponding flow port (71-78) when the two shutters are shifted to the perpendicular position by the rotation of the motor, and opens the corresponding flow port (71-78) when the two shutters are shifted to the horizontal position by the rotation of the motor.

The first divider plate (44) and the second divider plate (45) configured in the above-described manner are provided on both sides of the two humidity control chambers (65, 66) in the lateral direction. The first divider plate (44) and the second divider plate (45) extend in both of the two humidity control chambers (65, 66), and are perpendicularly supported by the casing (20). Further, the first divider plate (44) and the second divider plate (45) are able to move in the front-back direction. Specifically, on a lower surface of the upper divider plate (41) and an upper surface of the lower divider plate (40), rail grooves (not shown) extend in the front-back direction with which lower ends and upper ends of the first divider plate (44) and the second divider plate (45) engage. The first divider plate (44) and the second divider plate (45) are slidable in the front-back direction along the rail grooves.

### <Structure of Refrigerant Circuit>

The refrigerant circuit (11) formed in the humidity control apparatus (10) will be described below with reference to FIG. 5.

The refrigerant circuit (11) is a closed circuit including the first adsorption heat exchanger (14), the second adsorption heat exchanger (15), the compressor (12), a four-way switching valve (13), and a motor-operated expansion valve (18). The refrigerant circuit (11) performs a vapor compression refrigeration cycle by circulating a refrigerant filled therein.

In the refrigerant circuit (11), a discharge side of the compressor (12) is connected to a first port of the four-way switching valve (13), and a suction side of the compressor (12) is connected to a second port of the four-way switching valve (13). An end of the first adsorption heat exchanger (14) is connected to a third port of the four-way switching valve (13). The other end of the first adsorption heat exchanger (14) is connected to a fourth port of the four-way switching valve (13) through the motor-operated expansion valve (18) and the second adsorption heat exchanger (15).

The four-way switching valve (13) is configured to be able to switch between a first state where the first and fourth ports communicate with each other, and the second and third ports communicate with each other (a state shown in FIG. 5(A)), and a second state where the first and third ports communicate with each other, and the second and fourth ports communicate with each other (a state shown in FIG. 5(B)).

In the humidity control apparatus (10) of this embodiment, the refrigerant circuit (11) constitutes a heating medium circuit. In the refrigerant circuit (11), a high pressure gaseous refrigerant is supplied as a heating fluid medium to one of the two adsorption heat exchangers (14, 15) serving as a condenser (a radiator), and a low pressure gas-liquid two-phase refrigerant is supplied as a cooling fluid medium to the other adsorption heat exchanger (14, 15) serving as an evaporator.

### -Operation Mechanism-

The humidity control apparatus (10) of the fourth embodiment selectively performs "dehumidification/ventilation operation," "humidification/ventilation operation," "dehumidification/circulation operation," and "humidification/circulation operation." In the "dehumidification/ventilation operation" and the "humidification/ventilation operation," the humidity control apparatus (10) admits the outside air (OA) for humidity control, and supplies the humidity-controlled air to the inside of the room as supply air (SA), and simultaneously, the humidity control apparatus (10) admits the room air (RA) and discharges it as exhaust air (EA). In the "dehumidification/circulation operation" and the "humidification/circulation operation," the humidity control apparatus (10) admits the room air (RA) for humidity control, and supplies the humidity-controlled air to the inside of the room as the supply air (SA), and simultaneously, the humidity control apparatus (10) admits the outside air (OA), and discharges it as the exhaust air (EA). The operations will be described in detail below.

### <Dehumidification/Ventilation Operation>

In the humidity control apparatus (10) performing the dehumidification/ventilation operation, first operation and second operation described later are alternately performed at predetermined time intervals (e.g., every three minutes).

When the supply fan (30) of the humidity control apparatus (10) is operated during the dehumidification/ventilation operation, the outside air enters the casing (20) through the outside air inlet port (31) as first air. When the discharge fan (29) is operated, the room air enters the casing (20) through the room air inlet port (32) as second air.

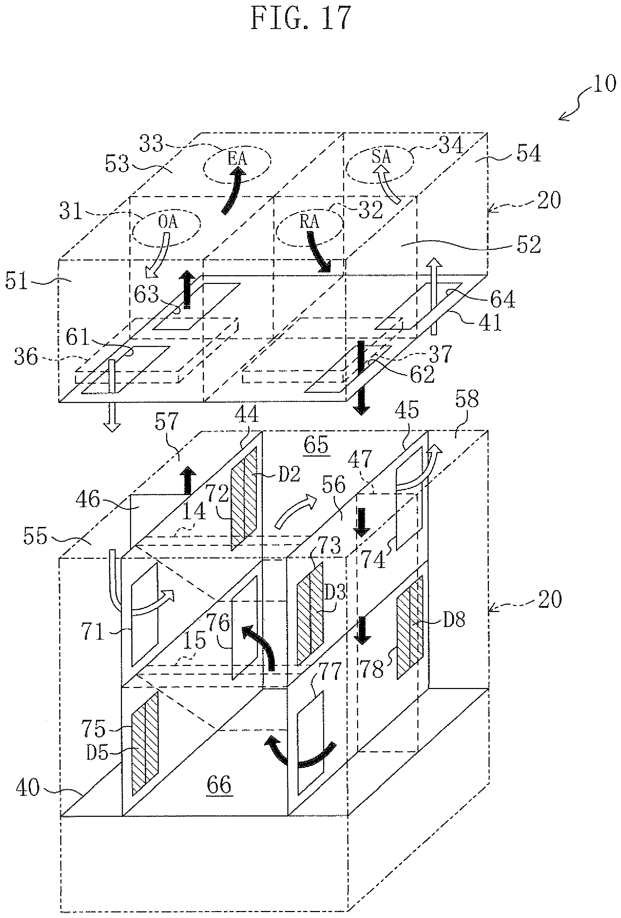

The first operation of the dehumidification/ventilation operation will be described below. As shown in FIG. 17, in the first operation, the first flow port (71), the fourth flow port (74), the sixth flow port (76), and the seventh flow port (77) are opened, and the second flow port (72), the third flow port (73), the fifth flow port (75), and the eighth flow port (78) are closed by switching the first to eighth dampers (D1-D8).

In the first operation, the four-way switching valve (13) in the refrigerant circuit (11) is set to the first state as shown in FIG. 5(A). In this state, the refrigerant in the refrigerant circuit (11) circulates to perform a refrigeration cycle. In this case, in the refrigerant circuit (11), the refrigerant discharged from the compressor (12) sequentially passes through the second adsorption heat exchanger (15), the motor-operated expansion valve (18), and the first adsorption heat exchanger (14). The second adsorption heat exchanger (15) functions as a condenser, and the first adsorption heat exchanger (14) functions as an evaporator.

As shown in FIG. 17, the first air that entered the outside air inlet passage (51) through the outside air inlet port (31) passes through the outside air filter (36). The outside air filter (36) traps dust contained in the first air. The first air that passed through the outside air filter (36) sequentially flows through the first communication port (61) and the first intermediate passage (55), and enters the first humidity control chamber (65) through the first flow port (71). The first air flows backward, and passes through the first adsorption heat exchanger (14). In the first adsorption heat exchanger (14), moisture in the first air is adsorbed by the adsorbent, and heat generated by the adsorption is absorbed by the refrigerant. The first air dehumidified by the first adsorption heat exchanger (14) enters the fourth intermediate passage (58) through the fourth flow port (74). The first air sequentially flows through the fourth communication port (64) and the inward supply passage (54), enters the duct through the inward supply port (34), and is supplied to the inside of the room.

The second air that entered the room air inlet passage (52) through the room air inlet port (32) passes through the room air filter (37). The room air filter (37) traps dust contained in the second air. The second air that passed through the room air filter (37) sequentially flows through the second communication port (62) and the second intermediate passage (56), and enters the second humidity control chamber (66) through the seventh flow port (77). The second air flows backward, and passes through the second adsorption heat exchanger (15). In the second adsorption heat exchanger (15), moisture is desorbed from the adsorbent heated by the refrigerant, and the desorbed moisture is given to the second air. The second air used for the recovery of the adsorbent of the second adsorption heat exchanger (15) flows into the third intermediate passage (57) through the sixth flow port (76). The second air sequentially flows through the third communication port (63) and the outward discharge passage (53), enters the duct through the outward discharge port (33), and is discharged outside the room.

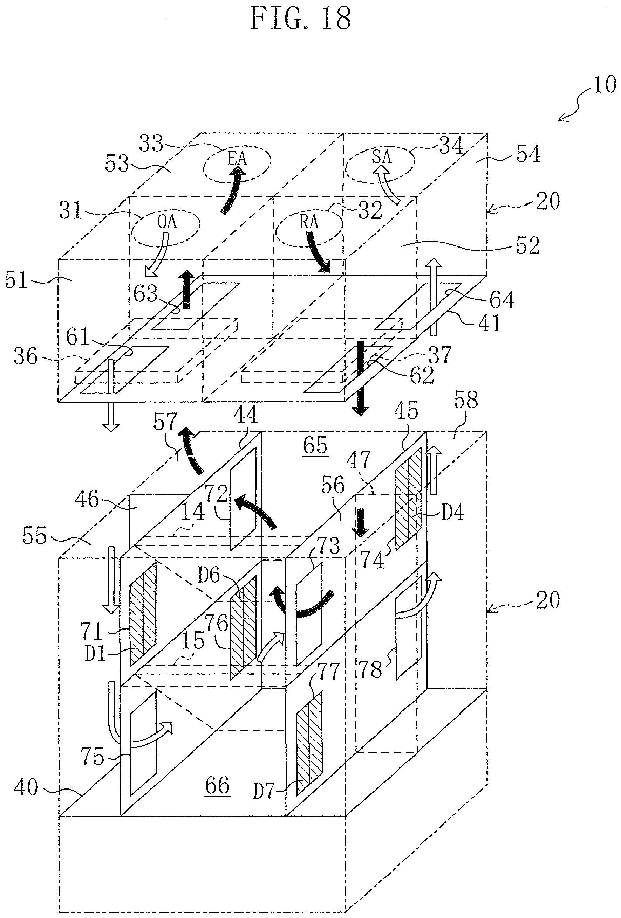

The second operation of the dehumidification/ventilation operation will be described below. As shown in FIG. 18, in the second operation, the second flow port (72), the third flow port (73), the fifth flow port (75), and the eighth flow port (78) are opened, and the first flow port (71), the fourth flow port (74), the sixth flow port (76), and the seventh flow port (77) are closed by switching the first to eighth dampers (D1-D8).

In the second operation, the four-way switching valve (13) of the refrigerant circuit (11) is set to the second state as shown in FIG. 5(B). In this state, the refrigerant in the refrigerant circuit (11) circulates to perform a refrigeration cycle. In this case, in the refrigerant circuit (11), the refrigerant discharged from the compressor (12) sequentially passes through the first adsorption heat exchanger (14), the motor-operated expansion valve (18), and the second adsorption heat exchanger (15). The first adsorption heat exchanger (14) functions as the condenser, and the second adsorption heat exchanger (15) functions as the evaporator.

As shown in FIG. 18, the first air that entered the outside air inlet passage (51) through the outside air inlet port (31) passes through the outside air filter (36). The outside air filter (36) traps dust contained in the first air. The first air that passed through the outside air filter (36) sequentially flows through the first communication port (61) and the first intermediate passage (55), and enters the second humidity control chamber (66) through the fifth flow port (75). The first air flows backward, and passes through the second adsorption heat exchanger (15). In the second adsorption heat exchanger (15), moisture in the first air is adsorbed by the adsorbent, and heat generated by the adsorption is absorbed by the refrigerant. The first air dehumidified by the second adsorption heat exchanger (15) flows into the fourth intermediate passage (58) through the eighth flow port (78). The first air sequentially flows through the fourth communication port (64) and the inward supply passage (54), enters the duct through the inward supply port (34), and is supplied to the inside of the room.

The second air that entered the room air inlet passage (52) through the room air inlet port (32) passes through the room air filter (37). The room air filter (37) traps dust contained in the second air. The second air that passed through the room air filter (37) sequentially flows through the second communication port (62) and the second intermediate passage (56), and enters the first humidity control chamber (65) through the third flow port (73). The second air flow backward, and passes through the first adsorption heat exchanger (14). In the first adsorption heat exchanger (14), moisture is desorbed from the adsorbent heated by the refrigerant, and the desorbed moisture is given to the second air. The second air used for the recovery of the adsorbent of the first adsorption heat exchanger (14) flows into the third intermediate passage (57) through the second flow port (72). The second air sequentially flows through the third communication port (63) and the outward discharge passage (53), enters the duct through the outward discharge port (33), and is discharged outside the room.

### <Humidification/Ventilation Operation>

In the humidity control apparatus (10) performing the humidification/ventilation operation, first operation and second operation described later are alternately performed at predetermined time intervals (e.g., every three minutes).

When the supply fan (30) of the humidity control apparatus (10) is operated during the humidification/ventilation operation, the outside air enters the casing (20) through the outside air inlet port (31) as first air. When the discharge fan (29) is operated, the room air enters the casing (20) through the room air inlet port (32) as second air.

In the first operation of the humidification/ventilation operation, as shown in FIG. 17, the first flow port (71), the fourth flow port (74), the sixth flow port (76), and the seventh flow port (77) are opened, and the second flow port (72), the third flow port (73), the fifth flow port (75), and the eighth flow port (78) are closed. The refrigerant circuit (11) enters the state shown in FIG. 5(B), in which the first adsorption heat exchanger (14) functions as a condenser, and the second adsorption heat exchanger (15) functions as an evaporator.

As shown in FIG. 17, the first air that entered the outside air inlet passage (51) through the outside air inlet port (31) sequentially flows through the outside air filter (36), the first communication port (61), the first intermediate passage (55), and the first flow port (71) to enter the first humidity control chamber (65), and passes through the first adsorption heat exchanger (14). The first air humidified by the first adsorption heat exchanger (14) sequentially flows through the fourth flow port (74), the fourth intermediate passage (58), the fourth communication port (64), and the inward supply passage (54), enters the duct through the inward supply port (34), and is supplied to the inside of the room.

The second air that entered the room air inlet passage (52) through the room air inlet port (32) sequentially flows through the room air filter (37), the second communication port (62), the second intermediate passage (56), and the seventh flow port (77) to enter the second humidity control chamber (66), and passes through the second adsorption heat exchanger (15). In the second adsorption heat exchanger (15), moisture in the second air is adsorbed by the adsorbent, and heat generated by the adsorption is absorbed by the refrigerant. The second air that gave the moisture to the adsorbent of the second adsorption heat exchanger (15) sequentially flows through the sixth flow port (76), the third intermediate passage (57), the third communication port (63), and the outward discharge passage (53), enters the duct through the outward discharge port (33), and is discharged outside the room.

In the second operation of the humidification/ventilation operation, as shown in FIG. 18, the second flow port (72), the third flow port (73), the fifth flow port (75), and the eighth flow port (78) are opened, and the first flow port (71), the fourth flow port (74), the sixth flow port (76), and the seventh flow port (77) are closed. The refrigerant circuit (11) enters the state shown in FIG. 5(A), in which the second adsorption heat exchanger (15) functions as a condenser, and the first adsorption heat exchanger (14) functions as an evaporator.

As shown in FIG. 18, the first air that entered the outside air inlet passage (51) through the outside air inlet port (31) sequentially flows through the outside air filter (36), the first communication port (61), the first intermediate passage (55), and the fifth flow port (75) to enter the second humidity control chamber (66), and passes through the second adsorption heat exchanger (15). In the second adsorption heat exchanger (15), moisture is desorbed from the adsorbent heated by the refrigerant, and the desorbed moisture is given to the first air. The first air humidified by the second adsorption heat exchanger (15) sequentially flows through the eighth flow port (78), the fourth intermediate passage (58), the fourth communication port (64), and the inward supply passage (54), enters the duct through the inward supply port (34), and is supplied to the inside of the room.

The second air that entered the room air inlet passage (52) through the room air inlet port (32) sequentially flows through the room air filter (37), the second communication port (62), the second intermediate passage (56), and the third flow port (73) to enter the first humidity control chamber (65), and passes through the first adsorption heat exchanger (14). In the first adsorption heat exchanger (14), moisture in the second air is adsorbed by the adsorbent, and heat generated by the adsorption is absorbed by the refrigerant. The second air that gave the moisture to the adsorbent of the first adsorption heat exchanger (14) sequentially flows through the second flow port (72), the third intermediate passage (57), the third communication port (63), and the outward discharge passage (53), enters the duct through the outward discharge port (33), and is discharged outside the room.

### <Dehumidification/Circulation Operation>

In the humidity control apparatus (10) performing the dehumidification/circulation operation, first operation and second operation described later are alternately performed at predetermined time intervals (e.g., every three minutes).

When the supply fan (30) of the humidity control apparatus (10) is operated during the dehumidification/circulation operation, the room air enters the casing (20) through the room air inlet port (32) as first air. When the discharge fan (29) is operated, the outside air enters the casing (20) through the outside air inlet port (31) as second air.

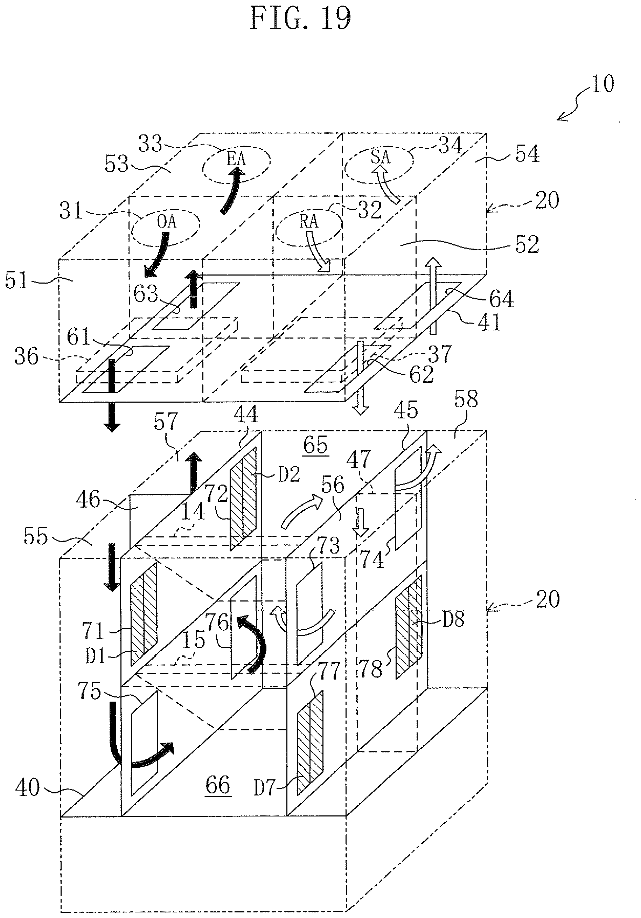

In the first operation of the dehumidification/circulation operation, as shown in FIG. 19, the third flow port (73), the fourth flow port (74), the fifth flow port (75), and the sixth flow port (76) are opened, and the first flow port (71), the second flow port (72), the seventh flow port (77), and the eighth flow port (78) are closed. The refrigerant circuit (11) enters the state shown in FIG. 5(A), in which the second adsorption heat exchanger (15) functions as a condenser, and the first adsorption heat exchanger (14) functions as an evaporator.

As shown in FIG. 19, the first air that entered the room air inlet passage (52) through the room air inlet port (32) sequentially flows through the room air filter (37), the second communication port (62), the second intermediate passage (56), and the third flow port (73) to enter the first humidity control chamber (65), and passes through the first adsorption heat exchanger (14). In the first adsorption heat exchanger (14), moisture in the first air is adsorbed by the adsorbent, and heat generated by the adsorption is absorbed by the refrigerant. The first air dehumidified by the first adsorption heat exchanger (14) sequentially flows through the fourth flow port (74), the fourth intermediate passage (58), the fourth communication port (64), and the inward supply passage (54), enters the duct through the inward supply port (34), and is supplied to the inside of the room.

The second air that entered the outside air inlet passage (51) through the outside air inlet port (31) sequentially flows through the outside air filter (36), the first communication port (61), the first intermediate passage (55), and the fifth flow port (75) to enter the second humidity control chamber (66), and passes through the second adsorption heat exchanger (15). In the second adsorption heat exchanger (15), moisture is desorbed from the adsorbent heated by the refrigerant, and the desorbed moisture is given to the second air. The second air used for the recovery of the adsorbent of the second adsorption heat exchanger (15) sequentially flows through the sixth flow port (76), the third intermediate passage (57), the third communication port (63), and the outward discharge passage (53), enters the duct through the outward discharge port (33), and is discharged outside the room.

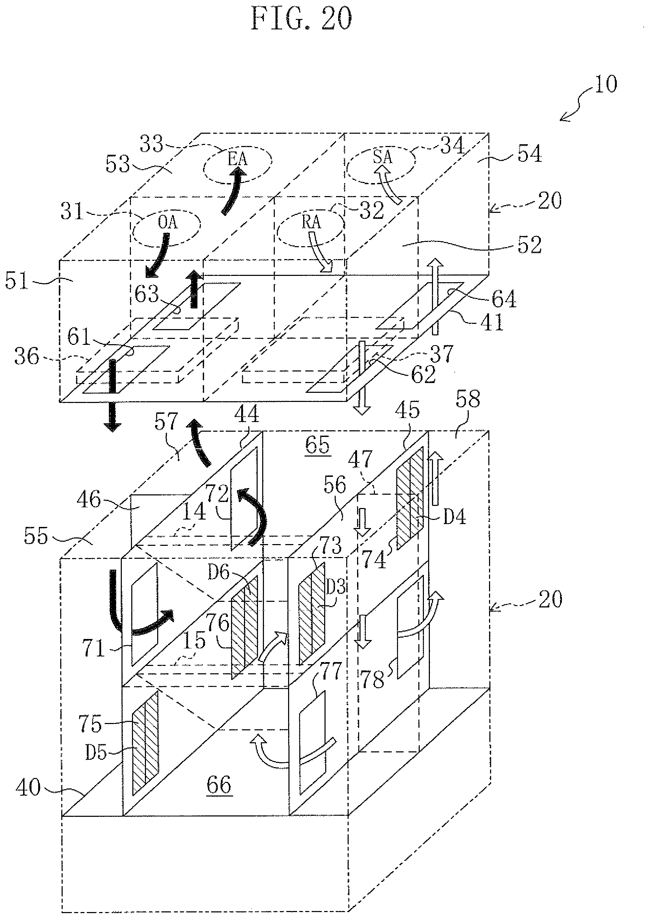

In the second operation of the dehumidification/circulation operation, as shown in FIG. 20, the first flow port (71), the second flow port (72), the seventh flow port (77), and the eighth flow port (78) are opened, and the third flow port (73), the fourth flow port (74), the fifth flow port (75), and the sixth flow port (76) are closed. The refrigerant circuit (11) enters the state shown in FIG. 5(B), in which the first adsorption heat exchanger (14) functions as a condenser, and the second adsorption heat exchanger (15) functions as an evaporator.

As shown in FIG. 20, the first air that entered the room air inlet passage (52) through the room air inlet port (32) sequentially flows through the room air filter (37), the second communication port (62), the second intermediate passage (56), and the seventh flow port (77) to enter the second humidity control chamber (66), and passes through the second adsorption heat exchanger (15). In the second adsorption heat exchanger (15), moisture in the first air is adsorbed by the adsorbent, and heat generated by the adsorption is absorbed by the refrigerant. The first air dehumidified by the second adsorption heat exchanger (15) sequentially flows through the eighth flow port (78), the fourth intermediate passage (58), the fourth communication port (64), and the inward supply passage (54), enters the duct through the inward supply port (34), and is supplied to the inside of the room.

The second air that entered the outside air inlet passage (51) through the outside air inlet port (31) sequentially flows through the outside air filter (36), the first communication port (61), the first intermediate passage (55), and the first flow port (71) to enter the first humidity control chamber (65), and passes through the first adsorption heat exchanger (14). In the first adsorption heat exchanger (14), moisture is desorbed from the adsorbent heated by the refrigerant, and the desorbed moisture is given to the second air. The second air used for the recovery of the first adsorption heat exchanger (14) sequentially flows through the second flow port (72), the third intermediate passage (57), the third communication port (63), and the outward discharge passage (53), enters the duct through the outward discharge port (33), and is discharged outside the room.

### <Humidification/Circulation Operation>

In the humidity control apparatus (10) performing the humidification/circulation operation, first operation and second operation described later are alternately performed at predetermined time intervals (e.g., every three minutes).

When the supply fan (30) of the humidity control apparatus (10) is operated during the humidification/circulation operation, the room air enters the casing (20) through the room air inlet port (32) as first air. When the discharge fan (29) is operated, the outside air enters the casing (20) through the outside air inlet port (31) as second air.

In the first operation of the humidification/circulation operation, as shown in FIG. 19, the third flow port (73), the fourth flow port (74), the fifth flow port (75), and the sixth flow port (76) are opened, and the first flow port (71), the second flow port (72), the seventh flow port (77), and the eighth flow port (78) are closed. The refrigerant circuit (11) enters the state shown in FIG. 5(B), in which the first adsorption heat exchanger (14) functions as a condenser, and the second adsorption heat exchanger (15) functions as an evaporator.

As shown in FIG. 19, the first air that entered the room air inlet passage (52) through the room air inlet port (32) sequentially flows through the room air filter (37), the second communication port (62), the second intermediate passage (56), and the third flow port (73) to enter the first humidity control chamber (65), and passes through the first adsorption heat exchanger (14). In the first adsorption heat exchanger (14), moisture is desorbed from the adsorbent heated by the refrigerant, and the desorbed moisture is given to the first air. The first air humidified by the first adsorption heat exchanger (14) sequentially flows through the fourth flow port (74), the fourth intermediate passage (58), the fourth communication port (64), and the inward supply passage (54), enters the duct through the inward supply port (34), and is supplied to the inside of the room.

The second air that entered the outside air inlet passage (51) through the outside air inlet port (31) sequentially flows through the outside air filter (36), the first communication port (61), the first intermediate passage (55), and the fifth flow port (75) to enter the second humidity control chamber (66), and passes through the second adsorption heat exchanger (15). In the second adsorption heat exchanger (15), moisture in the second air is adsorbed by the adsorbent, and heat generated by the adsorption is absorbed by the refrigerant. The second air that gave the moisture to the adsorbent of the second adsorption heat exchanger (15) sequentially flows through the sixth flow port (76), the third intermediate passage (57), the third communication port (63), and the outward discharge passage (53), enters the duct through the outward discharge port (33), and is discharged outside the room.

In the second operation of the humidification/circulation operation, as shown in FIG. 20, the first flow port (71), the second flow port (72), the seventh flow port (77), and the eighth flow port (78) are opened, and the third flow port (73), the fourth flow port (74), the fifth flow port (75), and the sixth flow port (76) are closed. The refrigerant circuit (11) enters the state shown in FIG. 5(A), in which the second adsorption heat exchanger (15) functions as a condenser, and the first adsorption heat exchanger (14) functions as an evaporator.

As shown in FIG. 20, the first air that entered the room air inlet passage (52) through the room air inlet port (32) sequentially flows through the room air filter (37), the second communication port (62), the second intermediate passage (56), and the seventh flow port (77) to enter the second humidity control chamber (66), and passes through the second adsorption heat exchanger (15). In the second adsorption heat exchanger (15), moisture is desorbed from the adsorbent heated by the refrigerant, and the desorbed moisture is given to the first air. The first air humidified by the second adsorption heat exchanger (15) sequentially flows through the eighth flow port (78), the fourth intermediate passage (58), the fourth communication port (64), and the inward supply passage (54), enters the duct through the inward supply port (34), and is supplied to the inside of the room.

The second air that entered the outside air inlet passage (51) through the outside air inlet port (31) sequentially flows through the outside air filter (36), the first communication port (61), the first intermediate passage (55), and the first flow port (71) to enter the first humidity control chamber (65), and passes through the first adsorption heat exchanger (14). In the first adsorption heat exchanger (14), moisture in the second air is adsorbed by the adsorbent, and heat generated by the adsorption is absorbed by the refrigerant. The second air that gave the moisture to the adsorbent of the first adsorption heat exchanger (14) sequentially flows through the second flow port (72), the third intermediate passage (57), the third communication port (63), and the outward discharge passage (53), enters the duct through the outward discharge port (33), and is discharged outside the room.

### -Maintenance of Humidity Control Apparatus-

As described above, the humidity control apparatus (10) is contained in the storage space (S) of the closet, and is installed on the floor. Accordingly, in the state shown in FIG. 1, space for maintenance is provided only in front of the humidity control apparatus (10). In the humidity control apparatus (10), maintenance of the components can be performed from the front side of the humidity control apparatus (10) by detaching the front cover (22) of the casing (20).

Specifically, for replacement or cleaning of the outside air filter (36) and the room air filter (37), the open/close lid (22b) of the front cover (22) is detached to uncover the opening (22a). Thus, the outside air filter (36) and the room air filter (37) are exposed outside the casing (20) through the opening (22a). In this state, a user, etc., can easily draw the outside air filter (36) and the room air filter (37) out of the casing by sliding the filters (36, 37) forward. Then, the cleaned or replaced filters (36, 37) are inserted in the casing (20) through the opening (22a), thereby returning the filters (36, 37) to the original positions. In the fourth embodiment, the outside air filter (36) and the room air filter (37) are configured as separate members. However, the filters (36, 37) can be integrated as a unit extending in both of the outside air inlet passage (51) and the room air inlet passage (52). In this case, the filters can be drawn out together as the filter unit for the maintenance.

For maintenance of the other components in the casing (20), the front cover (22) is detached from the casing body (21). This exposes the divider plates (40-48), the compressor (12), the adsorption heat exchangers (14, 15), etc., outside the casing (20). Thus, the user, etc., can remove the compressor (12), and the adsorption heat exchangers (14, 15) from the front side of the casing (20) for the maintenance. For maintenance of the plurality of dampers (D1-D8), the first divider plate (44) and the second divider plate (45) shown in FIG. 19 are removed from the front side of the casing (20) by sliding the plates forward. In this way, the dampers (D1-D8) on the first divider plate (44) and the second divider plate (45) can easily be maintained. The first divider plate (44) and the second divider plate (45) may be configured to be separable into a portion above the central divider plate (48) and a portion below the central divider plate (48). In this case, for example, only the upper portion of the first divider plate (44) can be removed for maintenance of the first damper (D1) and the second damper (D2), or only the lower portion of the second divider plate (45) can be removed for maintenance of the seventh damper (D7) and the eighth damper (D8). This allows for easy maintenance of selected dampers.

With the front cover (22) detached, the supply fan (30) and the discharge fan (29) can be exposed outside the casing (20) by drawing the longitudinal divider plate (42) and the lateral divider plate (43) arranged in the upper portion of the casing (20). In this way, the user, etc., can maintain the fans (30, 29) by moving the fans forward.

### -Advantages of Fourth Embodiment-

In the fourth embodiment, the outside air inlet port (31), the outward discharge port (33), the room air inlet port (32), and the inward supply port (34) are gathered on the top plate (23) of the casing (20). Therefore, as shown in FIG. 1, for example, the humidity control apparatus (10) can be installed on the floor of the storage space (S) of the closet, and the ducts (5) connected to the duct connection ports (31, 32, 33, 34) can extend upward (toward the ceiling). Specifically, the ducts would not be routed in horizontally around the humidity control apparatus (10) of the fourth embodiment. This can drastically reduce space required for installation of the humidity control apparatus (10) in the horizontal direction. Further, as compared with the humidity control apparatus installed on the ceiling, for example, the humidity control apparatus (10) installed on the floor allows for easier maintenance the apparatus by the user.

In the fourth embodiment, the first humidity control chamber (65) and the second humidity control chamber (66) are vertically aligned. This can alleviate size increase of the casing (20) in the horizontal direction. Therefore, space for the installation of the humidity control apparatus (10) in the horizontal direction can further be reduced. For example, when the two humidity control cambers (65, 66) are aligned in the front-back direction, maintenance of the rearward humidity control chamber from the front side would be difficult. However, in the fourth embodiment, both of the adsorption heat exchangers (14, 15) are exposed toward the front by detaching the front cover (22). This allows for easy maintenance of both of the adsorption heat exchangers (14, 15).

As shown in FIG. 16, the first divider plate (44) and the second divider plate (45) including the plurality of dampers (D1-D8) are provided on both sides of the humidity control chambers (65, 66) in the lateral direction. This allows for easy maintenance of the dampers (D1-D8) by drawing the divider plates (44, 45) forward. With the first divider plate (44) and the second divider plate (45) arranged on the right and left sides of the humidity control chambers (65, 66), water condensed in the humidity control chambers (65, 66) is prevented from leaking outside through the closed flow ports (71-78).

The supply fan (30) and the discharge fan (29) are arranged in an upper position in the humidity control chambers (65, 66) to be adjacent to the outside air inlet port (31) and the room air inlet port (32). This makes it possible to reduce air flow resistance of the supply fan (30) and the discharge fan (29), and power required by the fans. Further, with the compressor (12) arranged in a lower portion in the humidity control chambers (65, 66), the center of gravity of the humidity control apparatus (10) is lowered, thereby allowing for stable installation of the humidity control apparatus (10) on the floor. Further, as compared with the case where the compressor (12) is arranged at a relatively upper position, the maintenance of the compressor (12) would be easier.

The front cover (22) is detachably attached to the front side of the casing (20). This allows for easy maintenance of the components by detaching the front cover (22), even if the humidity control apparatus (10) is installed in the closet.

The room air inlet port (32) and the outside air inlet port (31) are arranged on the front side of the casing (20), and the outside air filter (36) and the room air filter (37) are arranged below the inlet ports (31, 32). Therefore, with the front cover (22) detached from the casing body (21), the outside air filter (36) and the room air filter (37) can easily be drawn forward, thereby allowing for easy cleaning and replacement of the filters by the user.

### [Fifth Embodiment within the scope of the Invention]

The structure of a humidity control apparatus (10) of a fifth embodiment is different from that of the humidity control apparatus (10) of the fourth embodiment. The difference between the humidity control apparatus (10) of the fifth embodiment and that of the fourth embodiment will be described below.

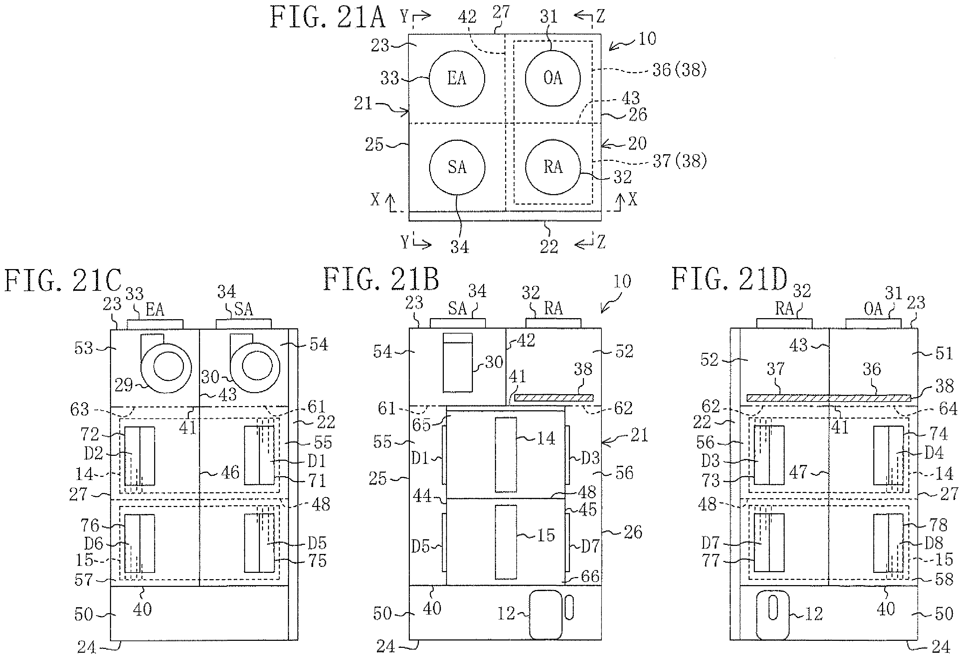

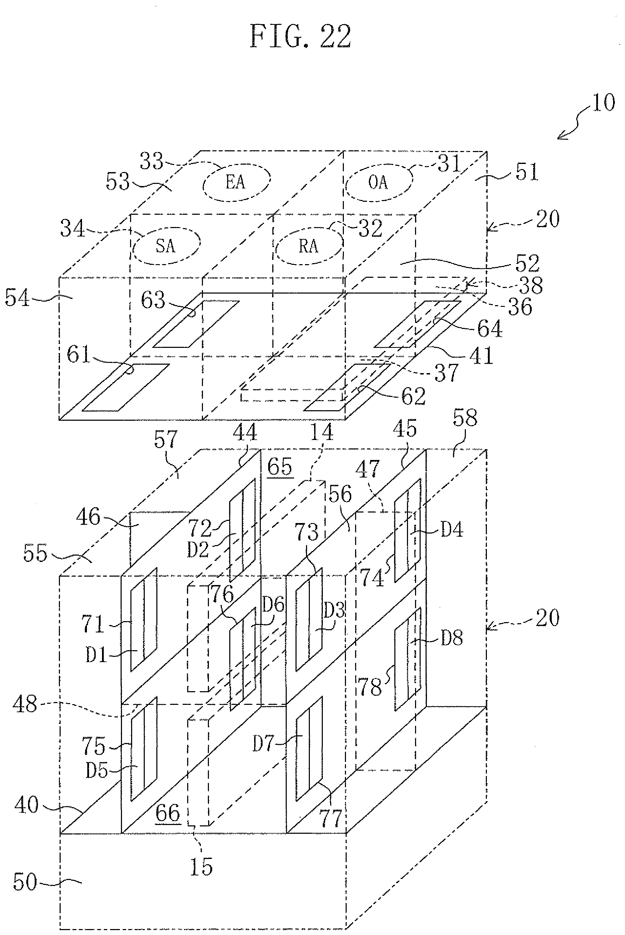

As shown in FIGS. 21 and 22, a casing (20) of the fifth embodiment includes an inward supply port (34) formed in a front right portion of a top plate (23), a room air inlet port (32) is formed in a front left portion of the top plate (23), an outward discharge port (33) is formed in a rear right portion of the top plate (23), and an outside air inlet port (31) is formed in a rear left portion of the top plate (23).

An inward supply passage (54) is provided in a front right portion of space between the top plate (23) and the upper divider plate (41), a room air inlet passage (52) is provided in a front left portion of the space, an outward discharge passage (53) is provided in a rear right portion of the space, and an outside air inlet passage (51) is provided in a rear left portion of the space.

In the fifth embodiment, a filter unit (38) is provided to extend in both of the outside air inlet passage (51) and the room air inlet passage (52). Specifically, the filter unit (38) includes an outside air filter section (36) placed in the outside air inlet passage (51), and a room air filter section (37) placed in the room air inlet passage (52) integrated with each other. A lateral divider plate (43) includes a through hole (not shown) through which the filter unit (38) penetrates. A sealing member is arranged around the through hole to prevent leakage of the air between the outside air inlet passage (51) and the room air inlet passage (52). With the front cover (22) detached, the filter unit (38) is configured to be removable from the casing (20) from the front side of the casing (20).

In each of the humidity control chambers (65, 66) of the fifth embodiment, the corresponding adsorption heat exchanger (14, 15) is arranged in a vertical position. Specifically, each of the adsorption heat exchangers (14, 15) is arranged in the corresponding humidity control chamber (65, 66) in such a manner that the fins (17) are vertically arranged to be parallel to the front cover (22) and the rear plate (27).

### -Operation Mechanism-

Like the first embodiment, the humidity control apparatus (10) of the fifth embodiment selectively performs "dehumidification/ventilation operation," "humidification/ventilation operation," "dehumidification/circulation operation," and "humidification/circulation operation."

### <Dehumidification/Ventilation Operation>

In first operation of the dehumidification/ventilation operation, the second adsorption heat exchanger (15) functions as a condenser, and the first adsorption heat exchanger (14) functions as an evaporator (see FIG. 5(A)). In second operation, the first adsorption heat exchanger (14) functions as a condenser, and the second adsorption heat exchanger (15) functions as an evaporator (see FIG. 5(B)).

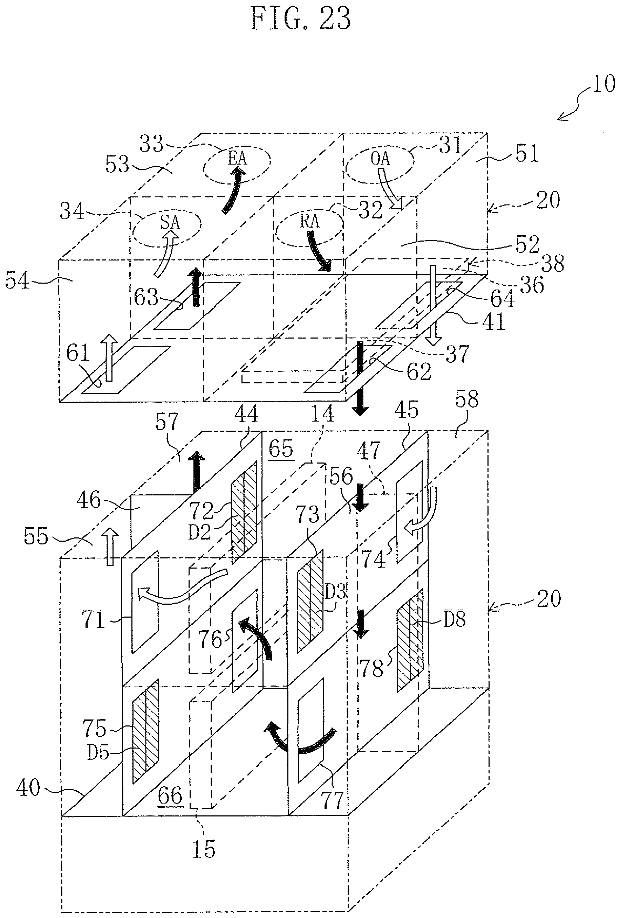

As shown in FIG. 23, in the first operation of the dehumidification/ventilation operation, first air, which is the outside air introduced through the outside air inlet port (31), passes through the outside air filter section (36) of the filter unit (38), and enters the first humidity control chamber (65) through the fourth flow port (74). The first air flows in the lateral direction, and is dehumidified as it traverses the first adsorption heat exchanger (14). The dehumidified first air passes through the first flow port (71), and is supplied to the inside of the room through the inward supply port (34). Second air, which is room air introduced through the room air inlet port (32), passes through the room air filter section (37) of the filter unit (38), and enters the second humidity control chamber (66) through the seventh flow port (77). The second air flows in the lateral direction, and is used for recovery of the adsorbent as it traverses the second adsorption heat exchanger (15). Then, the second air passes through the sixth flow port (76), and is discharged outside the room through the outward discharge port (33).

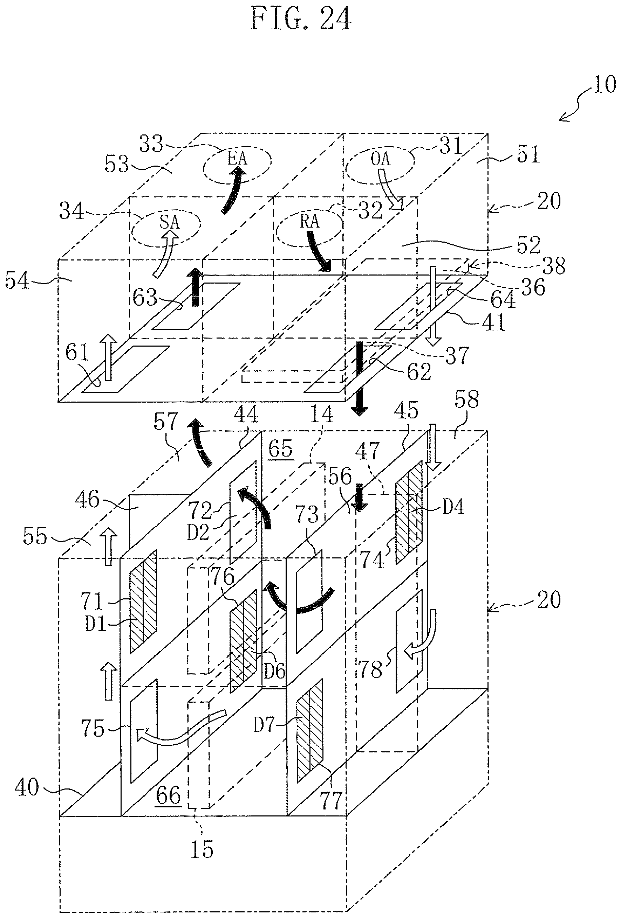

As shown in FIG. 24, in the second operation of the dehumidification/ventilation operation, the first air, which is the outside air introduced through the outside air inlet port (31), passes through the outside air filter section (36) of the filter unit (38), and enters the second humidity control chamber (66) through the eighth flow port (78). The first air flows in the lateral direction, and is dehumidified as it traverses the second adsorption heat exchanger (15). The dehumidified first air passes through the fifth flow port (75), and is supplied to the inside of the room through the inward supply port (34). The second air, which is the room air introduced through the room air inlet port (32), passes through the room air filter section (37) of the filter unit (38), and enters the third flow port (73) through the first humidity control chamber (65). The second air flows in the lateral direction, and is used for recovery of the adsorbent as it traverses the first adsorption heat exchanger (14). Then, the second air passes through the second flow port (72), and is discharged outside the room through the outward discharge port (33).

### <Humidification/Ventilation Operation>

In first operation of the dehumidification/ventilation operation, the first adsorption heat exchanger (14) functions as a condenser, and the second adsorption heat exchanger (15) functions as an evaporator (see FIG. 5(B)). In second operation, the second adsorption heat exchanger (15) functions as a condenser, and the first adsorption heat exchanger (14) functions as an evaporator (see FIG. 5(A)).

As shown in FIG. 23, in the first operation of the humidification/ventilation operation, the first air, which is the outside air introduced through the outside air inlet port (31), flows into the first humidity control chamber (65) through the fourth flow port (74), and is humidified by the first adsorption heat exchanger (14). The humidified first air passes through the first flow port (71), and is supplied to the inside of the room through the inward supply port (34). The second air, which is room air introduced through the room air inlet port (32), flows into the second humidity control chamber (66) through the seventh flow port (77), and gives moisture to the adsorbent of the second adsorption heat exchanger (15). Then, the second air passes through the sixth flow port (76), and is discharged outside the room through the outward discharge port (33).

As shown in FIG. 24, in the second operation of the humidification/ventilation operation, the first air, which is the outside air introduced through the outside air inlet port (31), flows into the second humidity control chamber (66) through the eighth flow port (78), and is humidified by the second adsorption heat exchanger (15). The humidified first air passes through the fifth flow port (75), and is supplied to the inside of the room through the inward supply port (34). The second air, which is the room air introduced through the room air inlet port (32), flows into the first humidity control chamber (65) through the third flow port (73), and gives moisture to the adsorbent of the first adsorption heat exchanger (14). Then, the second air passes through the second flow port (72), and is discharged outside the room through the outward discharge port (33).

### <Dehumidification/Circulation Operation>

In first operation of the dehumidification/circulation operation, the second adsorption heat exchanger (15) functions as a condenser, and the first adsorption heat exchanger (14) functions as an evaporator (see FIG. 5(A)). In second operation, the first adsorption heat exchanger (14) functions as a condenser, and the second adsorption heat exchanger (15) functions as an evaporator (see FIG. 5(B)).

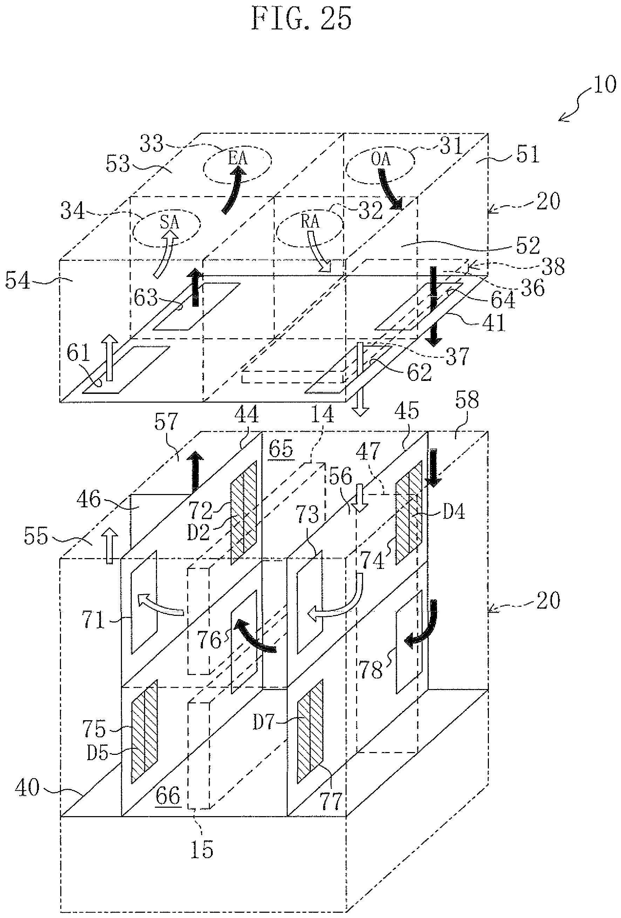

As shown in FIG. 25, in the first operation of the dehumidification/circulation operation, the first air, which is the room air introduced through the room air inlet port (32), flows into the first humidity control chamber (65) through the third flow port (73), and is dehumidified by the first adsorption heat exchanger (14). The dehumidified first air passes through the first flow port (71), and is supplied to the inside of the room through the inward supply port (34). The second air, which is the outside air introduced through the outside air inlet port (31), flows into the second humidity control chamber (66) through the eighth flow port (78), and is used for recovery of the adsorbent of the second adsorption heat exchanger (15). Then, the second air passes through the sixth flow port (76), and is discharged outside the room through the outward discharge port (33).

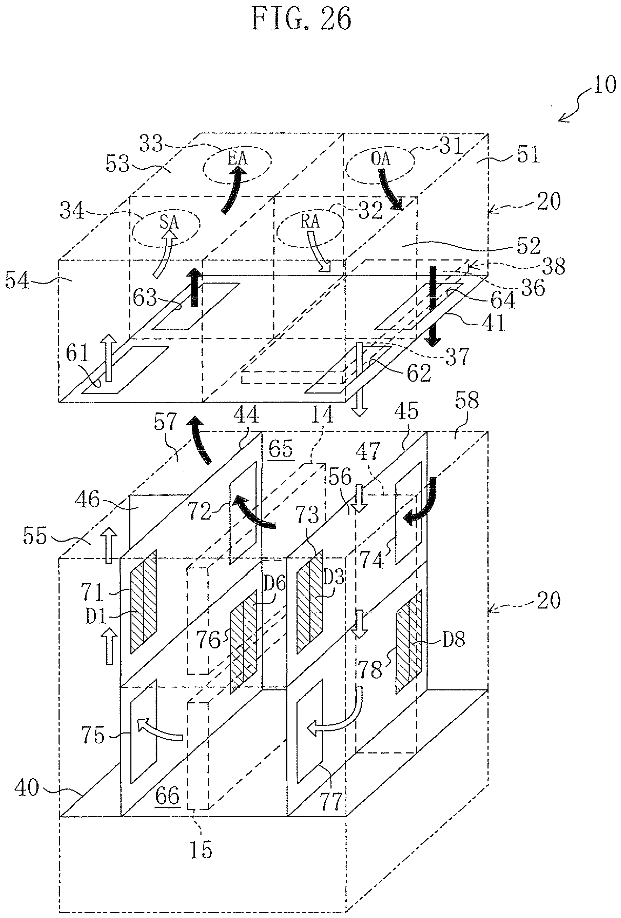

As shown in FIG. 26, in the second operation of the dehumidification/circulation operation, the first air, which is the room air introduced through the room air inlet port (32), flows into the second humidity control chamber (66) through the seventh flow port (77), and is dehumidified by the second adsorption heat exchanger (15). The dehumidified first air passes through the fifth flow port (75), and is supplied to the inside of the room through the inward supply port (34). The second air, which is the outside air introduced through the outside air inlet port (31), flows into the first humidity control chamber (65) through the third flow port (73), and is used for recovery of the adsorbent of the first adsorption heat exchanger (14). Then, the second air passes through the third flow port (73), and is discharged outside the room through the outward discharge port (33).

### <Humidification/Circulation Operation>

In first operation of the humidification/circulation operation, the first adsorption heat exchanger (14) functions as a condenser, and the second adsorption heat exchanger (15) functions as an evaporator (see FIG. 5(B)). In second operation, the second adsorption heat exchanger (15) functions as a condenser, and the first adsorption heat exchanger (14) functions as an evaporator (see FIG. 5(A)).

As shown in FIG. 25, in the first operation of the humidification/circulation operation, the first air, which is the room air introduced through the room air inlet port (32), flows into the first humidity control chamber (65) through the third flow port (73), and is humidified by the first adsorption heat exchanger (14). The humidified first air passes through the first flow port (71), and is supplied to the inside of the room through the inward supply port (34). The second air, which is the outside air introduced through the outside air inlet port (31), flows into the second humidity control chamber (66) through the eighth flow port (78), and gives moisture to the adsorbent of the second adsorption heat exchanger (15). Then, the second air passes through the sixth flow port (76), and is discharged outside the room through the outward discharge port (33).

As shown in FIG. 26, in the second operation of the humidification/ventilation operation, the first air, which is the room air introduced through the room air inlet port (32), flows into the second humidity control chamber (66) through the seventh flow port (77), and is humidified by the second adsorption heat exchanger (15). The humidified first air passes through the fifth flow port (75), and is supplied to the inside of the room through the inward supply port (34). The second air, which is the outside air introduced through the outside air inlet port (31), flows into the first humidity control chamber (65) through the fourth flow port (74), and gives moisture to the adsorbent of the first adsorption heat exchanger (14). Then, the second air passes through the second flow port (72), and is discharged outside the room through the outward discharge port (33).

### -Advantages of Fifth Embodiment-

In the fifth embodiment, like the fourth embodiment, the outside air inlet port (31), the room air inlet port (32), the outward discharge port (33), and the inward supply port (34) are formed in the top plate (23) of the casing (20). Therefore, the humidity control apparatus (10) can be installed in the storage space (S) of the closet, with the ducts connected to the duct connection ports (31, 32, 33, 34) extending upward (toward the ceiling). Further, like the first embodiment, maintenance of the components can easily be performed from the front side by detaching the front cover (22) from the casing body (21).

In the fifth embodiment, the outside air inlet port (31) and the room air inlet port (32) are aligned in the front-back direction, and the filter unit (38) is arranged below the inlet ports (31, 32). Therefore, maintenance of the outside air filter section (36) and the room air filter section (37) can easily be performed by drawing the filter unit (38) forward.

### [Sixth Embodiment out of the scope of the Invention]

A sixth embodiment is directed to a ventilation apparatus (80) for ventilating the inside of the room. The ventilation apparatus (80) is an on-floor ventilation apparatus installed on the floor in the storage space (S) of the closet, like the above-described embodiments.

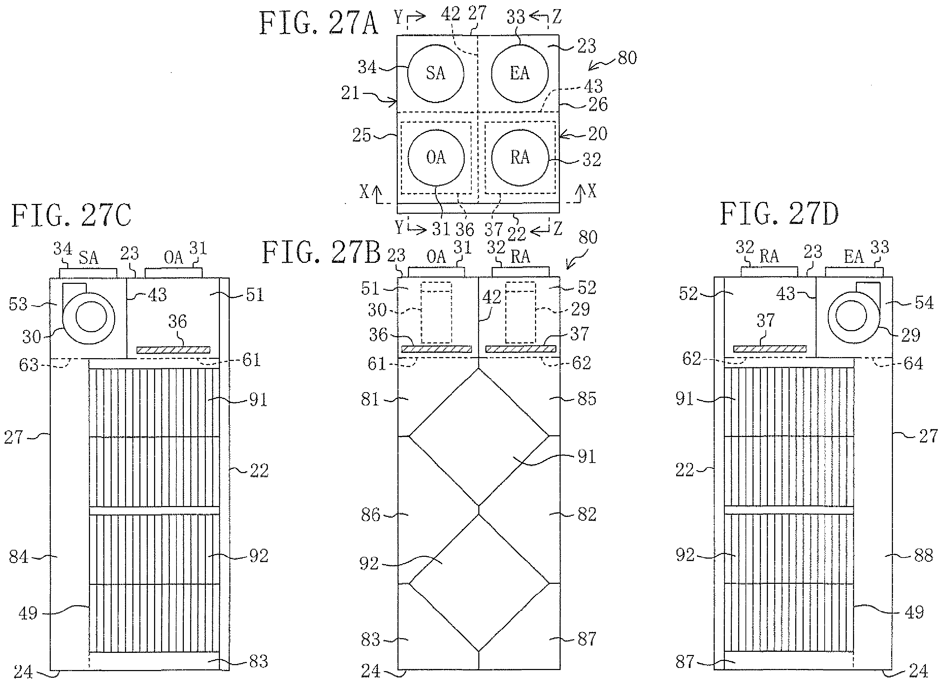

As shown in FIG. 27, the ventilation apparatus (80) includes a casing (20) similar to that of the above-described embodiments. A front cover (22) is detachably attached to a front side of a casing body (21). Like the first embodiment, the ventilation apparatus (80) includes an outside air inlet port (31), a room air inlet port (32), an outward discharge port (33), and an inward supply port (34) formed in a top plate (23) of the casing (20). In an upper portion of space inside the casing (20), like the first embodiment, an outside air inlet passage (51) and a first communication port (61) are formed below the outside air inlet port (31), a room air inlet passage (52) and a second communication port (62) are formed below the room air inlet port (32), an outward discharge passage (53) and a third communication port (63) are formed below the outward discharge port (33), and an inward supply passage (54) and a fourth communication port (64) are formed below the inward supply port (34).

Like the first embodiment, the outside air inlet passage (51) contains an outside air filter (36), the room air inlet passage (52) contains a room air filter (37), the outward discharge passage (53) contains a discharge fan (29), and the inward supply passage (54) contains a supply fan (30).

Unlike the first embodiment, a first heat exchange element (91) is arranged in an upper portion of a room below the upper divider plate (41), and a second heat exchange element (92) is arranged in a lower portion of the room below the upper divider plate (41). The heat exchange elements (91, 92) constitute an air conditioner for performing air conditioning by heat exchange between outside air (OA) and room air (RA). Each of the heat exchange elements (91, 92) is substantially in the shape of a quadrangular prism, and is held in the casing (20) in such a manner that diagonal lines thereof are aligned in the vertical and horizontal directions, respectively. Each of the heat exchange elements (91, 92) includes a plurality of layers laminated in the front-back direction, and two air flow passages which obliquely intersect with each other, and are separated from each other. As the air flows in the two air flow passages, flows of the air in the passages exchange sensible heat and latent heat. Specifically, each of the heat exchange elements (91, 92) constitutes a so-called total heat exchanger for exchanging heat and moisture between the two flows of the air intersecting with each other in the element.

A first upper passage (81) is formed in a room on a right upper side of the first heat exchange element (91), and a second upper passage (85) is formed in a room on a left upper side of the first heat exchange element (91). The first upper passage (81) communicates with the first communication port (61), and the second upper passage (85) communicates with the second communication port (62).

Between the first heat exchange element (91) and the second heat exchange element (92), a first intermediate passage (82) is formed in a room on the left side, and a second transit passage (86) is formed in a room on the right side. The first upper passage (81) communicates with the first intermediate passage (82) through one of the air flow passages of the first heat exchange element (91). The second upper passage (85) communicates with the second intermediate passage (86) through the other air flow passage of the first heat exchange element (91).

A first lower passage (83) is formed in a room on a right lower side of the second heat exchange element (92), and a second lower passage (87) is formed in a room on a left lower side of the second heat exchange element (92). The first intermediate passage (82) communicates with the first lower passage (83) through one of the air flow passages of the second heat exchange element (92). The second intermediate passage (86) communicates with the second lower passage (87) through the other air flow passage of the second heat exchange element (92).

A rear divider plate (49) is formed on the back of the heat exchange elements (91, 92), and a room is provided between the rear divider plate (49) and a rear plate (27). This room is divided by a divider plate (not shown) into laterally aligned two rooms. A first rear passage (84) is provided on the right of the divider plate, and a second rear passage (88) is provided on the left of the divider plate. The first rear passage (84) communicates with the first lower passage (83) at a lower end thereof, and communicates with the third communication port (63) at an upper end thereof. The second rear passage (88) communicates with the second lower passage (87) at a lower end thereof, and communicates with the fourth communication port (64) at an upper end thereof.

### -Operation Mechanism-

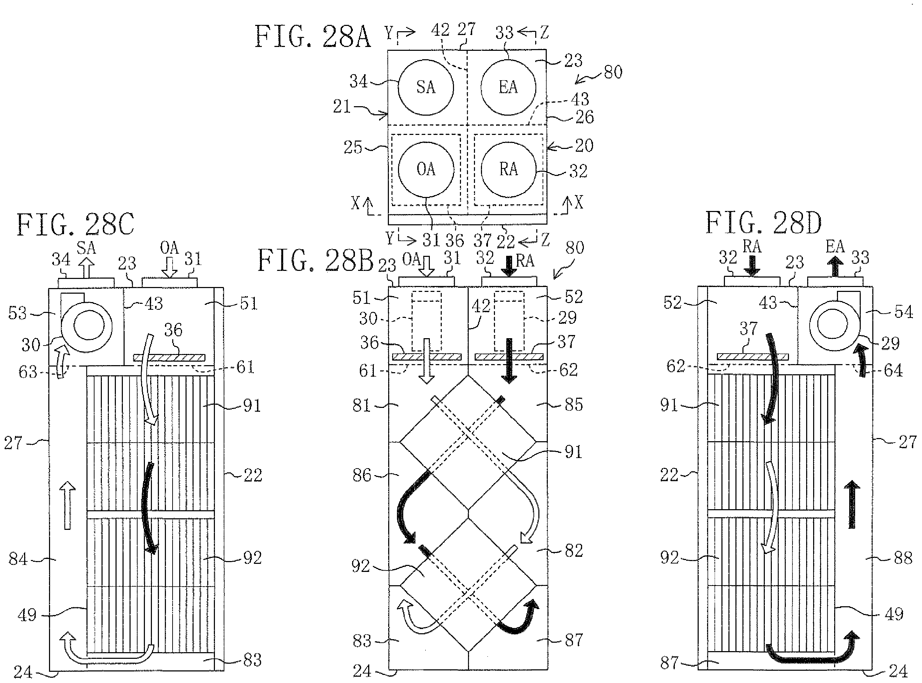

Operation mechanism of the ventilation apparatus (80) of the sixth embodiment will be described with reference to FIG. 28.

When the supply fan (30) is operated, the outside air (OA) enters the casing (20) through the outside air inlet port (31) as first air. When the discharge fan (29) is operated, the room air (RA) enters the casing (20) through the room air inlet port (32) as second air.

The first air sequentially passes through the outside air inlet passage (51), the first communication port (61), and the first upper passage (81), and flows through one of the air flow passages of the first heat exchange element (91). The second air sequentially passes through the room air inlet passage (52), the second communication port (62), and the second upper passage (85), and flows through the other air flow passage of the first heat exchange element (91). For example, in summer, humidity and temperature of the first air admitted from the outside may be higher than those of the second air admitted from the inside of the room cooled or dehumidified by the air conditioner. Therefore, in the first heat exchange element (91), heat and moisture of the first air are given to the second air, thereby cooling and dehumidifying the first air.

The first air exited from the first heat exchange element (91) to enter the first intermediate passage (82) flows through one of the air flow passages of the second heat exchange element (92). The second air exited from the first heat exchange element (91) to enter the second intermediate passage (86) flows through the other air flow passage of the second heat exchange element (92). For example, in summer, the second heat exchange element (92) cools and dehumidifies the first air, like the first heat exchange element (91).

The first air exited from the second heat exchange element (92) to enter the first lower passage (83) passes through the first rear passage (84), the third communication port (63), and the inward supply passage (54), and is supplied to the inside of the room through the inward supply port (34) and the duct. The second air exited from the second heat exchange element (92) to enter the second lower passage (87) passes through the second rear passage (88), the fourth communication port (64), and the outward discharge passage (53), and is discharged outside the room through the outward discharge port (33) and the duct.

### -Advantages of Sixth Embodiment-

In the ventilation apparatus (80) of the sixth embodiment, like the fourth and fifth embodiments, the outside air inlet port (31), the room air inlet port (32), the outward discharge port (33), and the inward supply port (34) are formed in the top plate (23) of the casing (20). Therefore, the humidity control apparatus (10) can be installed in the storage space (S) of the closet, etc., and the ducts connected to the duct connection ports (31, 32, 33, 34) can extend upward (toward the ceiling). Like the first and second embodiments, maintenance of the components can easily be performed by detaching the front cover (22) from the casing body (21).

In the sixth embodiment, the room air inlet port (32) and the outside air inlet port (31) are arranged on the front side of the casing (20), and the outside air filter (36) and the room air filter (37) are provided below the inlet ports (31, 32). Therefore, with the front cover (22) detached from the casing body (21), the outside air filter (36) and the room air filter (37) can easily be drawn forward, thereby allowing for easy cleaning and replacement of the filter by the user, etc.

### [Other Embodiments]

The above-described embodiments may be modified in the following manner.

In the first and second embodiments, a refrigerant in the refrigerant circuit (11) for performing a refrigeration cycle is used as a heating fluid medium for heating or cooling the adsorbent of the adsorption heat exchangers (14, 15). However, for example, the heating fluid medium may be warm water heated by a predetermined heat source, cold water cooled by a predetermined cooling apparatus, or any other heating fluid medium.

In the sixth embodiment, the heat exchange elements (91, 92) are used as an air conditioner for conditioning air to be supplied to the inside of the room. However, for example, the air conditioner may be a sensible heat exchanger, a heater, etc., for controlling the air temperature only, an adsorption member, a humidifier, etc., for controlling the air humidity only, or a combination of them. In the sixth embodiment, the heat exchange elements (91, 92) may be aligned in the horizontal direction, or only a single heat exchange element (91) may be used.

The above-described embodiments are merely preferred embodiments in nature, and are not intended to limit the scope, applications, and use of the invention.

### INDUSTRIAL APPLICABILITY

As described above, the present invention is useful for a humidity control apparatus for controlling air humidity in the room, and a ventilation apparatus for ventilating the room.

### DESCRIPTION OF REFERENCE CHARACTERS

- 10: Humidity control apparatus
- 11: Heating medium circuit (refrigerant circuit)
- 12: Compressor
- 14: First adsorption heat exchanger (adsorption member, adsorption heat exchanger)
- 15: Second adsorption heat exchanger (adsorption member, adsorption heat exchanger)
- 20: Casing
- 21: Casing body
- 22: Front cover
- 29: Discharge fan
- 30: Supply fan
- 31: Outside air inlet port
- 32: Room air inlet port
- 33: Outward discharge port
- 34: Inward supply port
- 36: Outside air filter (first filter)
- 37: Room air filter (second filter)
- 44: First divider plate (divider plate)
- 45: Second divider plate (divider plate)
- 50: Drawer unit
- 65: First humidity control chamber (humidity control chamber)
- 66: Second humidity control chamber (humidity control chamber)
- 71-78: Flow port
- 80: Desiccant rotor
- 91: First heat exchange element
- 92: Second heat exchange element
- D1-D8: Damper

## Claims

1. A humidity control apparatus (10) comprising:
a casing (20) containing first and second adsorption members (14, 15), each of which carrying an adsorbent capable of adsorbing moisture, and a heating medium circuit (11) in which a heating fluid medium for heating or cooling the adsorbents of the first and second adsorption members (14, 15) flows, where the humidity control apparatus (10) brings air into contact with the adsorbents of the first and second adsorption members (14, 15) for humidity control, and supplies the humidity-controlled air to the inside of a room,
wherein the humidity control apparatus (10) further includes a holding member (50) which holds the first and second adsorption members (14, 15) and the heating medium circuit (11) together, and is configured to be drawn out of the casing (20),
**characterized in that** the humidity control apparatus (10) further includes:
a first divider plate (44) and a second divider plate (45) which extend from a bottom plate (24) to an upper divider plate (41), and are perpendicularly supported by the casing (20) to be parallel to right and left plates (25, 26) of the casing (20),
a central divider plate (48) which divides a room between the first and second divider plates (44, 45) into a first humidity control chamber (65) and a second humidity control chamber (66) which are aligned in a vertical direction, and
a support plate (40) formed at a lower end of the second humidity control chamber (66) between the first and second divider plates (44, 45),
**in that** the first humidity control chamber (65) contains the first adsorption heat exchanger (14) arranged on the central divider plate (48), while the second humidity control chamber (66) contains the second adsorption heat exchanger (15) arranged on the support plate (40), and
**in that** the holding member (50) is comprised of the support plate (40), the first and second divider plates (44, 45), and the central divider plate (48) being coupled integrally.

## Patentansprüche

1. Feuchtigkeitssteuervorrichtung (10), umfassend:
ein Gehäuse (20), das ein erstes und ein zweites Adsorptionselement (14, 15) enthält, von denen jedes ein Adsorptionsmittel trägt, das in der Lage ist, Feuchtigkeit zu adsorbieren, und eine Heizmediumschaltung (11), in der ein Heizfluidmedium zum Erwärmen oder Kühlen der Adsorptionsmittel des ersten und zweiten Adsorptionselements (14, 15) fließt, wobei die Feuchtigkeitssteuervorrichtung (10) Luft in Kontakt mit den Adsorptionsmitteln des ersten und zweiten Adsorptionselements (14, 15) zur Feuchtigkeitssteuerung bringt und die feuchtegesteuerte Luft dem Inneren eines Raums zuführt,
wobei die Feuchtigkeitssteuervorrichtung (10) weiter ein Halteelement (50) einschließt, welches das erste und das zweite Adsorptionselement (14, 15) und die Heizmediumschaltung (11) zusammenhält und so konfiguriert ist, dass es aus dem Gehäuse (20) herausgezogen wird,
**dadurch gekennzeichnet, dass** die Feuchtigkeitssteuervorrichtung (10) weiter einschließt:
eine erste Trennplatte (44) und eine zweite Trennplatte (45), die sich von einer unteren Platte (24) zu einer oberen Trennplatte (41) erstrecken und senkrecht durch das Gehäuse (20) gestützt werden, um parallel zu rechten und linken Platten (25, 26) des Gehäuses (20) zu verlaufen,
eine zentrale Trennplatte (48), die einen Raum zwischen der ersten und der zweiten Trennplatte (44, 45) in eine erste Feuchtigkeitssteuerkammer (65) und eine zweite Feuchtigkeitssteuerkammer (66) trennt, die in einer vertikalen Richtung ausgerichtet sind, und
eine Stützplatte (40), die an einem unteren Ende der zweiten Feuchtigkeitssteuerkammer (66) zwischen der ersten und der zweiten Trennplatte (44, 45) ausgebildet ist,
dadurch, dass die erste Feuchtigkeitssteuerkammer (65) den ersten Adsorptionswärmetauscher (14) enthält, der auf der zentralen Trennplatte (48) angeordnet ist, während die zweite Feuchtigkeitssteuerkammer (66) den zweiten Adsorptionswärmetauscher (40) enthält, der auf der Stützplatte (15) angeordnet ist, und
dadurch, dass das Halteelement (50) aus der Stützplatte (40), der ersten und der zweiten Trennplatte (44, 45) und der zentralen Trennplatte (48) besteht, die einstückig miteinander gekoppelt sind.

## Revendications

1. Appareil de régulation de l'humidité (10) comprenant :
un boîtier (20) contenant des premier et deuxième éléments d'adsorption (14, 15), chacun d'eux portant un agent adsorbant capable d'adsorber l'humidité, et un circuit de milieu chauffant (11) dans lequel un agent fluide chauffant pour chauffer ou refroidir les agents adsorbants des premier et deuxième éléments d'adsorption (14, 15) s'écoule, où l'appareil de régulation de l'humidité (10) amène de l'air en contact avec les agents adsorbants des premier et deuxième éléments d'adsorption (14, 15) en vue d'une régulation de l'humidité, et apporte l'air régulé en humidité à l'intérieur d'une pièce,
dans lequel l'appareil de régulation de l'humidité (10) inclut en outre un élément de maintien (50) qui maintient les premier et deuxième éléments d'adsorption (14, 15) et le circuit de milieu chauffant (11) ensemble, et est configuré pour être tiré à l'extérieur du boîtier (20),
**caractérisé en ce que** l'appareil de régulation de l'humidité (10) inclut en outre :
une première plaque de séparation (44) et une deuxième plaque de séparation (45) qui s'étendent depuis une plaque de fond (24) jusqu'à une plaque de séparation supérieure (41), et sont perpendiculairement supportées par le boîtier (20) pour être parallèles à des plaques droite et gauche (25, 26) du boîtier (20),
une plaque de séparation centrale (48) qui sépare une pièce entre les première et deuxième plaques de séparation (44, 45) en une première chambre de régulation de l'humidité (65) et une deuxième chambre de régulation de l'humidité (66) qui sont alignées dans une direction verticale, et
une plaque de support (40) formée au niveau d'une extrémité inférieure de la deuxième chambre de régulation de l'humidité (66) entre les première et deuxième plaques de séparation (44, 45),
**en ce que** la première chambre de régulation de l'humidité (65) contient le premier échangeur de chaleur à adsorption (14) agencé sur la plaque de séparation centrale (48), alors que la deuxième chambre de régulation de l'humidité (66) contient le deuxième échangeur de chaleur à adsorption (15) agencé sur la plaque de support (40), et
**en ce que** l'élément de maintien (50) est composé de la plaque de support (40), des première et deuxième plaques de séparation (44, 45) et de la plaque de séparation centrale (48) qui sont accouplées d'un seul tenant.
